(19) **Europäisches Patentamt European Patent Office Office européen des brevets**

(11) **EP 2 114 671 B1**

(12) **EUROPEAN PATENT SPECIFICATION**

(45) Date of publication and mention of the grant of the patent:
**07.12.2016 Bulletin 2016/49**

(21) Application number: **07869329.8**

(22) Date of filing: **17.12.2007**

(51) Int Cl.:
**B32B 27/00** *(2006.01)*    **B32B 7/02** *(2006.01)*
**B32B 27/32** *(2006.01)*

(86) International application number:
**PCT/US2007/087700**

(87) International publication number:
**WO 2008/079755 (03.07.2008 Gazette 2008/27)**

(54) **LAYERED FILMS, PACKAGES PREPARED THEREFROM, AND METHODS OF MAKING THE SAME**

MEHRSCHICHTIGE FOLIEN, DARAUS HERGESTELLTE VERPACKUNGEN UND HERSTELLUNGSVERFAHREN DAFÜR

FILMS EN COUCHES, EMBALLAGES PRÉPARÉES À PARTIR D'EUX, ET LEURS PROCÉDÉS DE FABRICATION

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **21.12.2006 ES 200603242**

(43) Date of publication of application:
**11.11.2009 Bulletin 2009/46**

(73) Proprietor: **Dow Global Technologies LLC Midland, MI 48674 (US)**

(72) Inventors:
• **NIETO, Jesus**
  **43850 Cambrils (ES)**
• **ROSENTHAL NÉE MARTIN, Carola**
  **43007 Tarragona (ES)**

(74) Representative: **Boult Wade Tennant Verulam Gardens 70 Gray's Inn Road London WC1X 8BT (GB)**

(56) References cited:
EP-A- 0 763 422        WO-A-2005/065945
DE-A1- 10 060 523      JP-A- 6 106 679
JP-A- 2000 135 759     US-A- 5 604 019

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

FIELD OF INVENTION

The invention relates to a multilayered film containing at least three layers, and where an inner layer of the film has a thickness of 15 percent, or less, of the total thickness of the film, and where the inner layer has a different modulus, or is prepared from different modulus polymers, each with respect to an outer (skin) layer.

BACKGROUND OF THE INVENTION

Films are used in numerous packaging applications, such in industrial, food and specialty packaging. For such packaging, it is desirable that the package be formed from a film that has a combination of specific properties, such as dart impact resistance, tear resistance, film stiffness, good sealability and good optics. Good sealability and hot tack are also desired for packages manufactured using high speed packaging machines. With existing technology, it is not possible to significantly improve film stiffness (required for example for down gauging a film and saving costs and materials), without sacrificing impact or tear. On the other hand, in the packaging industry, there is a need to improve tear resistance by at least 30 percent, without sacrificing optical properties and dart impact resistance. A desirable film composition will have a combination of increased stiffness, with increased gloss and increased tear resistance, and, preferably, an additional increase in hot tack and sealability. Alternatively, a desirable film composition will have an increased dart performance, with an increase in gloss and an increase in tear resistance.

International Publication No. WO 2005065945 discloses a stretch film with reduced catastrophic failure resistance under high strain rate. The examples show cast film structures with a 10 percent core layer, and formed from several ethylene-based polymers and a propylene homopolymer. This reference discloses an improved balance of ultimate stretchability, catastrophic failure and dart impact.

International Publication No. WO2004024433A2 discloses a multilayer film with one or more inner layers, which contain a stiffening polymer that may comprise HDPE, homopolymer PP or random copolymer PP. This reference discloses example films having relative thickness ratios of 15/70/15, for three layer films, and 10/20/40/20/10 or 10/30/20/30/10, for five layer films. This reference discloses films with high stiffness, greater than zero percent Cross Direction (CD) shrinkage, and improved clarity.

U.S. Publication No. 2001/0008687A1 discloses a multilayer film with multiple (at least 5) layers combining stiff and soft materials. This reference discloses films with a strain recovery of 55 percent or less, a Young's modulus of 70 MPa (10,000) to 1050 MPa (150,000 psi) and an elongation of 100 percent, or greater, at a strain rate of 600 percent per minute.

U.S. Patent No. 5,604,019 discloses multilayer films, with more than five layers (stiff and ductile layers), of which at least two layers are formed from a polyester or copolyester, and at least two other layers are formed from a ductile polymeric material, resulting in improved tensile properties and tear resistance.

European Patent EP 0 595 701B1 (Abstract) discloses a heat-shrinkable composite film, comprising a core layer and two outer, or intermediate layers, applied against each surface of the core layer. The outer and core layers have differences in flexural modulus and Vicat softening point. This reference discloses films having a core layer with 30 to 95 percent of total thickness (see Claim 13).

The reference "Properties and Structure of LLDPE/HDPE Three-Layer Coextruded Blown Films with Blended Middle Layers," Elkoun et al., ANTEC 2003, discloses three-layered coextruded blown films with middle layers composed of LLDPE/HDPE blends. Each layer is 1/3 of total film thickness. The addition of more HDPE in the middle layer results in increased modulus, but deteriorated tear and dart impact strength.

The reference "Polypropylene-Polyethylene Multilayer Films," Zhang et al., ANTEC 2005, discloses five layer coextruded films with 50 percent LLDPE polyethylene and 50 percent polypropylene composition, distributed in different ways among the five layers. Overall, the monolayer LLDPE reference showed better tear resistance relative to the coextruded films.

Japanese Patent Publication JP2000-094604 discloses a multilayered packaging film, comprising a biaxially oriented film formed form at least a three-layered laminate with a polyethylene resin as both surface layers, and a polypropylene resin as the middle layer. After coextruding the three-layered laminate, the film is quenched, and then the film is drawn by a factor of 2 to 5, in both the lengthwise and widthwise directions. The total thickness of the film is from 5 to 50 $\mu$m (microns), and the thickness of the middle layer, formed from the polypropylene resin, is from 10 to 90 percent of the total film thickness.

Japanese Publication JP 06-106679 discloses a stretch film comprising a core and outer layers, which have a sum total thickness greater than thickness of the core layer. The outer and core layers have differences in tensile elastic modulus and Vicat softening temperature. This film has heat shrinkability.

The patent reference RD401012 (Abstract) discloses three-layer films made of a core layer B, encapsulated in skin layers A. The weight ratios between the individual layers are 7 to 25 weight percent, preferably 10 to 20 weight percent A; 50 to 86 weight percent, preferably 60 to 80 weight percent B; 7 to 25 weight percent, preferably 10 to 20 weight percent A. Layers A are mainly formed from a low density polyethylene (homopolymers or copolymers). Layer B is mainly formed from (i) 15 to 40 weight percent, preferably 20 to 30 weight percent, of a plastomer, or elastomer, in the density range of 0.850 to 0.900 g/cc, and (ii) 60 to 85 weight percent, preferably 70 to 80 weight percent of a homo-polypropylene or a propylene-ethylene copolymer with a melt index of 4-20 g/10 minutes (at 230°C and 2.16 kg). This reference discloses films that have high tear propagation and high impact resistance.

However, none of these references teach multilayer films containing a thin core layer with a different modulus, or prepared from different modulus materials, each with respect to a thicker skin layer, and primarily for use in blown films. In addition, none of the references teach films that have improvements in hot tack, gloss and haze, and coupled with increased modulus and/or tear (with stiff core), or with increased dart and/or tear (softer core). Thus, there is a need for a multilayer films that have an increase in tear resistance, without sacrificing optical properties. In addition there is a need for multilayered films that have an improved combination of the following properties: modulus, tear, gloss, dart, and hot tack. Some of these needs and other have been met by the following invention.

SUMMARY OF THE INVENTION

The invention provides a film comprising at least three layers, and wherein at least one layer is an inner layer with a thickness of 20 percent or less of the total thickness of the film, and wherein said inner layer, or a polymer component (a) used to form said inner layer, has one of the following properties:

> A) a MD tensile, 2 percent secant modulus at least two times higher than the MD tensile, 2 percent secant modulus of a skin layer, or
> B) a MD tensile, 2 percent secant modulus at least five times lower than the MD tensile, 2 percent secant modulus of a skin layer; and

wherein the MD tensile, 2 percent secant modulus of the inner layer, or of the polymer component (a) used to form the inner layer, is measured on monolayered film formed from the composition of said inner layer, or the polymer component (a) used to form said inner layer, and in accordance with ISO 527-3-95; and
wherein the MD tensile, 2 percent secant modulus of the skin layer is measured on a monolayered film formed from the composition of said skin layer, and in accordance with ISO 527-3-95; and
wherein the inner layer, or at least one polymer component of the inner layer, has one of the following properties:

> C) a melt index, I2 (190°C/2.16kg) of less than, or equal to, 2 g/10 min, or
> D) a melt flow rate, MFR (230°C/2.16 kg) of less than, or equal to, 5g/10 min.

The invention also provides a method for forming a multilayered film, said method comprising:

> a) selecting a polymer or polymer blend suitable for each layer;
> b) forming a multilayered film from the polymers or blends, wherein the multilayered film comprises at least three layers; and
> wherein at least one layer is an inner layer with a thickness of 20 percent or less of the total thickness of the film, and wherein said inner layer, or a polymer component (a) used to form said inner layer, has one of the following properties:

>> A) a MD tensile, 2 percent secant modulus at least two times higher than the MD tensile, 2 percent secant modulus of a skin layer, or
>> B) a MD tensile, 2 percent secant modulus at least five times lower than the MD tensile, 2 percent secant modulus of a skin layer; and

wherein the MD tensile, 2 percent secant modulus of the inner layer, or the polymer component (a) used to form the inner layer, is measured on a monolayered film formed from the composition of said inner layer, or the polymer component (a) used to form said inner layer, and in accordance with ISO 527-3-95; and
wherein the MD tensile, 2 percent secant modulus of the skin layer is measured on a monolayered film formed from the composition of said skin layer, and in accordance with ISO 527-3-95; and
wherein the inner layer, or at least one polymer component of the inner layer, has one of the following properties:

> C) a melt index, I2 (190°C/2.16kg) of less than, or equal to, 2 g/10 min, or

D) a melt flow rate, MFR (230°C/2.16 kg) of less than, or equal to, 5g/10 min.

BRIEF DESCRIPTION OF THE DRAWINGS

Figure 1 is a profile of Dart Impact versus the percentage of core thickness in a series of multi-layered films.
Figure 2 is a profile of Elmendorf Tear versus the percentage of core thickness in a series of multi-layered films.
Figure 3 is a profile of some optical properties (gloss and haze) versus the percentage of core thickness in a series of multi-layered films.
Figure 4 is a profile of modulii (sec 2 percent CD and Young CD) versus the percentage of core thickness in a series of multi-layered films.

DETAILED DESCRIPTION OF THE INVENTION

I. Overview

The invention is directed to a multilayered film which contains one thin inner layer prepared from a material with different modulus, that is, lower modulus than that of a skin layer, or higher modulus than that of a skin layer, or an inner layer prepared from a blend containing higher or lower modulus materials. The core is less than, or equal to, 15 percent of the total thickness of the film, preferably less than, or equal to, 10 percent.

The thickness of a film layer can be determined, as known in the art, from the mass ratios of the layer compositions of the extruders used to form a multilayered film, and the final thickness of the multilayered film. For each film layer, the solid state density of each composition is determined, and the mass flow (kg/hr) of the associated extruder is known from the commonly used gravimetric feeders. From these two parameters, the volumetric flow of each layer composition can be determined. The volume ratio of each layer can be determined from the volume flow of the individual layer divided by the total volume flows of all layer compositions. For a constant total film thickness and width, the thickness ratio for each layer is the same as the volume ratio.

The thickness of a film layer can also be determined, as known in the art, by microscopic techniques, such as optical microscopy or electronic microscopy. As an example, a thin slice of the film is cut perpendicularly to the plane of the film using a microtome blade as follows. The film is cooled in liquid nitrogen in a microtome holder. Then a microtome blade cuts several slices from 10 to 15 $\mu$m (microns) in thickness. These slices are then observed with an optical microscope, and an image is projected therefrom. A software program, as known in the art, can be used to measure the thickness of each layer as shown on the projected image. Measurements can be made at different points on the image, and then an average can be determined. The film layers are clearly distinguishable by their different contrasts.

In particular, the inner layer, or a polymer component used to form said inner layer has one of the following properties:

A) a MD tensile, 2 percent secant modulus at least two times higher, preferably at least three times higher, and more preferably at least four times higher, than the MD tensile, 2 percent secant modulus of a skin layer, or
B) a MD tensile, 2 percent secant modulus at least five times lower, preferably at least six times lower, and more preferably at least seven times lower, than the MD tensile, 2 percent secant modulus of a skin layer.

When a thin, lower modulus inner layer is used, significant improvement in one or more of tear resistance, dart impact resistance and optics (gloss and haze) are obtained. When a thin, higher modulus inner layer is used, significant improvements in one or more of tear resistance, modulus, hot tack force and temperature window, and optics (gloss and haze) are obtained. The inventive films provide an unexpected improvement in surface-related property, like gloss, in films with exactly the same material in each skin layer and different material(s) in a thin core layer. Unexpected improvements in hot tack and sealability are also observed.

The inventive film configuration is also applicable to multilayer films with more than three layers, in which at least two thin internal, non-contiguous layers have the differentiated stiffness versus a skin layer. The inventive films are well suited for blown film for packaging applications.

In particular, the invention provides a film as defined in present claim 1.

The term "inner layer," as used in the context of melt index or melt flow rate, refers to the composition used to form the inner layer, in addition to a film formed from such composition.

In one embodiment, the at least one polymer component that has property C) or D) is the polymer component (a).

In one embodiment, each skin layer is formed from the same composition.

In one embodiment, the at least one inner layer has a MD tensile, 2 percent secant modulus of at least two times higher than the MD tensile, 2 percent secant modulus of a skin layer.

In another embodiment, the at least one inner layer has a MD tensile, 2 percent secant modulus of at least five times lower than the MD tensile, 2 percent secant modulus of a skin layer.

In another embodiment, the polymer component (a) has a MD tensile, 2 percent secant modulus of at least two times higher than the MD tensile, 2 percent secant modulus of a skin layer.

In another embodiment, the polymer component (a) has a MD tensile, 2 percent secant modulus of at least five times lower than the MD tensile, 2 percent secant modulus of a skin layer.

In one embodiment, the at least one inner layer has melt index, I2 (190°C/2.16kg) of less than, or equal to, 2 g/10 min.

In another embodiment, the at least one inner layer has melt index, I2 (230°C/2.16kg) of less than, or equal to, 5 g/10 min.

In another embodiment, the at least one polymer component of the inner layer has melt index, I2 (190°C/2.16kg) of less than, or equal to, 2 g/10 min. In a further embodiment, the at least one polymer component is the polymer component (a).

In another embodiment, the at least one polymer component of the inner layer has melt index, I2 (230°C/2.16kg) of less than, or equal to, 5 g/10 min. In a further embodiment, the at least one polymer component is the polymer component (a).

In one embodiment, the thickness of said inner layer is less than the thickness of a skin layer, and preferably less than thickness of each skin layer.

In one embodiment, each of the skin layers is adjacent to a respective surface of the inner layer.

In one embodiment, the at least one inner layer has a thickness from 10 to 15 percent of the total thickness of the film.

In one embodiment, the total thickness of the film is less than, or equal to, 50 $\mu$m (microns).

In another embodiment, the film consists of three layers.

In another embodiment, the film consists of five layers.

In one embodiment, the film does not contain an adhesive layer between two film layers.

In another embodiment, the at least one inner layer does not comprise a polar polymer selected from the group consisting of an ethylene vinyl acetate, a polyethylene terephthalate, a polyester, a polyamide, and combinations thereof.

In another embodiment, the at least one inner layer is formed from a composition comprising a propylene homopolymer, a propylene/$\alpha$-olefin interpolymer, a propylene/ethylene interpolymer, an ethylene/$\alpha$-olefin interpolymer, a blend comprising a propylene homopolymer, a blend comprising a propylene/$\alpha$-olefin interpolymer, a blend comprising a propylene/ethylene interpolymer, or a blend comprising an ethylene/$\alpha$-olefin interpolymer.

In another embodiment, the inner layer is formed from a composition comprising an ethylene/$\alpha$-olefin interpolymer or a blend comprising an ethylene/$\alpha$-olefin interpolymer. In a further embodiment, the ethylene/$\alpha$-olefin interpolymer is an interpolymer formed from monomers selected from ethylene and 1-octene, ethylene and 1-butene, ethylene and 1-hexene, ethylene and 1-pentene, ethylene and 1-heptene, ethylene and propylene, ethylene and 4-methylpentene-1, or mixtures thereof, and preferably ethylene and 1-butene, ethylene and 1-hexene or ethylene and 1-octene. In a further embodiment, the ethylene/$\alpha$-olefin interpolymer has a melt index ($I_2$) from 0.2 g/10 min to 2 g/10 min. In another, the ethylene/$\alpha$-olefin interpolymer has a density from 0.850 to 0.920 grams/cc.

In another embodiment, the inner layer is formed from a composition comprising a propylene homopolymer, a propylene/$\alpha$-olefin interpolymer, a propylene/ethylene interpolymer, a blend comprising a propylene homopolymer, a blend comprising a propylene/$\alpha$-olefin interpolymer, or a blend comprising a propylene/ethylene interpolymer. In a further embodiment, the inner layer is formed from a propylene/ethylene interpolymer or a blend comprising a propylene/ethylene interpolymer. In a further embodiment, the propylene/ethylene interpolymer has a melt index ($I_2$) from 0.01 g/10 min to 5 g/10 min. In another embodiment, the propylene/ethylene interpolymer has a density from 0.840 g/cc to 0.920 g/cc.

In one embodiment, the inventive film is a blown film.

An inventive film may comprise a combination of two or more embodiments as described herein.

The invention also provides an article comprising at least one component formed from an inventive film as described herein. An inventive article may comprise a combination of two or more embodiments as described herein.

The invention also provides a package comprising at least one component formed from an inventive film as described herein. An inventive package may comprise a combination of two or more embodiments as described herein

The invention also provides a method for forming a multilayered film, said method comprising:

a) selecting a polymer or polymer blend suitable for each layer;
b) forming a multilayered film from the polymers or blends, wherein the multilayered film comprises at least three layers; and

wherein at least one layer is an inner layer with a thickness of 20 percent or less of the total thickness of the film, and wherein said inner layer, or a polymer component (a) used to form said inner layer, has one of the following properties:

A) a MD tensile, 2 percent secant modulus at least two times higher than the MD tensile, 2 percent secant modulus of a skin layer, or

B) a MD tensile, 2 percent secant modulus at least five times lower than the MD tensile, 2 percent secant modulus of a skin layer; and

wherein the MD tensile, 2 percent secant modulus of the inner layer, or of the polymer component (a) used to form the inner layer, is measured on a monolayered film formed from the composition of said inner layer, or the polymer component (a) used to form said inner layer, and in accordance with ISO 527-3-95; and

wherein the MD tensile, 2 percent secant modulus of the skin layer is measured on a monolayered film formed from the composition of said skin layer, and in accordance with ISO 527-3-95; and

wherein the inner layer, or at least one polymer component of the inner layer, has one of the following properties:

C) a melt index, I2 (190°C/2.16kg) of less than, or equal to, 2 g/10 min, or

D) a melt flow rate, MFR (230°C/2.16 kg) of less than, or equal to, 5g/10 min.

In one embodiment, the at least one polymer component that has property C) or D) is the polymer component (a).

In a further embodiment, the film is formed using a blown film process.

An inventive method may comprise a combination of two or more embodiments as described herein.

## II. Materials for Inner and Outer Layers

The inner and skin layers may be prepared from a variety of thermoplastic polymers. Representative polymers include the natural or synthetic resins, such as, but not limited to, styrene block copolymers; rubbers, polyolefins, such as polyethylene, polypropylene and polybutene; ethylene/vinyl acetate (EVA) copolymers; ethylene acrylic acid copolymers (EAA); ethylene acrylate copolymers (EMA, EEA, EBA); polybutylene; polybutadiene; nylons; polycarbonates; polyesters; polyethylene oxide; polypropylene oxide; ethylene-propylene interpolymers, such as ethylene-propylene rubber and ethylene-propylene-diene monomer rubbers; chlorinated polyethylene; thermoplastic vulcanates; ethylene ethylacrylate polymers (EEA); ethylene styrene interpolymers (ESI); polyurethanes; as well as functionally modified polyolefins, such as silane-graft-modified olefin polymers or maleic anhydride graft-modified olefin polymers; and combinations of two or more of these polymers. Preferably, the film comprises at least one ethylene-based polymer and/or at least one propylene-based polymer.

### A. Ethylene-based Polymers for used in Inner and Skin Layers

Ethylene-based polymers for used in the inner or skin layers include ethylene homopolymers or interpolymers as the sole polymer component, or as the major (> 50 weight percent based on sum weight of polymers) polymer component. Such polymers include linear low density polyethylene (LLDPE), high density polyethylene (HDPE), low density polyethylene (LDPE), ultra low density polyethylene (ULDPE), very low density polyethylene (VLDPE), homogeneously branched linear ethylene polymers, homogeneously branched substantially linear ethylene polymers, and heterogeneously branched linear ethylene polymers. The amount of one or more of these polymers, if any, in a film composition, will vary depending on the properties desired, the other components, and the type polyethylene(s).

Suitable comonomers useful for polymerizing with ethylene include, but are not limited to, ethylenically unsaturated monomers, conjugated or nonconjugated dienes or polyenes. Examples of such comonomers include the $C_3$-$C_{20}$ α-olefins, such as propylene, isobutylene, 1-butene, 1-pentene, 1-hexene, 4-methyl-1-pentene, 1-heptene, 1-octene, 1-nonene, 1-decene. Preferred comonomers include propylene, 1-butene, 1-hexene, 4-methyl-1-pentene and 1-octene, and more preferably propylene, 1-butene, 1-hexene and 1-octene, the latter of which is especially preferred. Other suitable monomers include styrene, halo-or-alkyl-substituted styrenes, tetrafluoroethylenes, vinylbenzocyclobutanes, butadienes, isoprenes, pentadienes, hexadienes, octadienes and cycloalkenes, for example, cyclopentene, cyclohexene and cyclooctene. Typically, ethylene is copolymerized with one $C_3$-$C_{20}$ α-olefin. Preferred comonomers include $C_3$-$C_8$ α-olefins, and preferably propylene, 1-butene, 1-pentene, 4-methyl-1-pentene, 1-hexene, 1-heptene, and 1-octene, and more preferably propylene, 1-butene, 1-hexene, and 1-octene.

The terms "homogeneous" and "homogeneously-branched" are used in reference to ethylene/α-olefin interpolymers, in which the α-olefin comonomer is randomly distributed within a given polymer molecule, and substantially all of the polymer molecules have the same ethylene-to-comonomer ratio.

The homogeneously branched ethylene interpolymers that can be used in the practice of this invention include homogeneously branched linear ethylene interpolymers, and homogeneously branched substantially linear ethylene interpolymers. In one embodiment, the inner layer of the film is formed from a composition comprising a homogeneously branched linear ethylene interpolymer, or a homogeneously branched substantially linear ethylene interpolymer.

Included amongst the homogeneously branched linear ethylene interpolymers are ethylene polymers, which lack long chain branching (or measurable amounts of long chain branching), but do have short chain branches, derived from the comonomer polymerized into the interpolymer, and which are homogeneously distributed, both within the same polymer chain, and between different polymer chains. That is, homogeneously branched linear ethylene interpolymers lack long chain branching (or measurable amounts of long chain branching), just as is the case for the linear low density polyethylene polymers or linear high density polyethylene polymers, and are made using uniform branching distribution polymerization processes, as described, for example, by Elston in U.S. Patent 3,645,992. Commercial examples of homogeneously branched linear ethylene/$\alpha$-olefin interpolymers include TAFMER™ polymers supplied by the Mitsui Chemical Company, and EXACT™ polymers supplied by Exxon Chemical Company.

The homogeneously branched substantially linear ethylene interpolymers are described in US Patent Nos. 5,272,236; 5,278,272; 5,703.187; 6,054,544; 6,335,410, and 6,723,810. Some of these references also disclose methods of preparing these polymers.

In addition, the substantially linear ethylene interpolymers are homogeneously branched ethylene polymers having long chain branching. The long chain branches have the same comonomer distribution as the polymer backbone, and can have about the same length as the length of the polymer backbone. The carbon length of a long chain branch is longer than the carbon length of a short chain branch formed from the incorporation of one comonomer into the polymer backbone. Long chain branching can be determined by using 13C Nuclear Magnetic Resonance (NMR) spectroscopy, and can be quantified using the method of Randall (Rev. Macromol. Chem. Phys., C29 (2 &3), 1989, p. 285-297).

Typically, "substantially linear" means that the bulk polymer is substituted, on average, with 0.01 long chain branches per 1000 total carbons (including both backbone and branch carbons) to 3 long chain branches per 1000 total carbons. Preferred polymers are substituted with 0.01 long chain branches per 1000 total carbons, to 1 long chain branch per 1000 total carbons, more preferably from 0.05 long chain branches per 1000 total carbons to 1 long chain branch per 1000 total carbons, and especially from 0.3 long chain branches per 1000 total carbons to 1 long chain branch per 1000 total carbons.

Commercial examples of substantially linear interpolymers include the ENGAGE™ polymers (available from The Dow Chemical Company), and the AFFINITY™ polymers (available from The Dow Chemical Company).

The substantially linear ethylene interpolymers form a unique class of homogeneously branched ethylene polymers. They differ substantially from the well-known class of conventional, homogeneously branched linear ethylene interpolymers, described by Elston in U.S. Patent 3,645,992, and, moreover, they are not in the same class as conventional heterogeneous "Ziegler-Natta catalyst polymerized" linear ethylene polymers (for example, ultra low density polyethylene (ULDPE), linear low density polyethylene (LLDPE) or high density polyethylene (HDPE), made, for example, using the technique disclosed by Anderson et al. in U.S. Patent 4,076,698); nor are they in the same class as high pressure, free-radical initiated, highly branched, polyethylenes, such as, for example, low density polyethylene (LDPE), ethylene-acrylic acid (EAA) copolymers and ethylene vinyl acetate (EVA) copolymers.

The homogeneously branched linear or substantially linear ethylene interpolymers are characterized as having a narrow molecular weight distribution ($M_w/M_n$). For the linear and substantially linear ethylene polymers, the molecular weight distribution, $M_w/M_n$, is for example, less than or equal to 5, preferably less than or equal to 4, and more preferably from 1.5 to 4, and even more preferably from 1.5 to 3, and most preferably from 2.5 to 3.5. All individual values and subranges from 1 to 5, or from 1.05 to 5, are included herein and disclosed herein.

The distribution of comonomer branches for the homogeneous linear and substantially linear ethylene interpolymers is characterized by its SCBDI (Short Chain Branch Distribution Index) or CDBI (Composition Distribution Branch Index), and is defined as the weight percent of the polymer molecules having a comonomer content within 50 percent of the median total molar comonomer content. The CDBI of a polymer is calculated from data obtained from techniques known in the art, such as, for example, Temperature Rising Elution Fractionation (abbreviated herein as "TREF"), as described, for example, by Wild et al., Journal of Polymer Science, Poly. Phys. Ed., Vol. 20, p. 441 (1982), or in U.S.-A-Patent Nos. 4,798,081 and 5,008,204. The SCBDI or CDBI for the homogeneously branched linear interpolymers and the homogeneously branched substantially linear interpolymers, useful in the compositions of the present invention, is preferably greater than 50 percent, especially greater than 70 percent, more preferably greater than 90 percent.

The heterogeneously branched linear ethylene interpolymers can also be used in the present invention. Heterogeneous linear ethylene interpolymers include interpolymers of ethylene and one or more $C_3$ to $C_8$ $\alpha$-olefins. Homopolymers of ethylene can also be prepared using the same catalysts that are used to prepare the heterogeneous systems, such as Ziegler-Natta catalysts. Both the molecular weight distribution, and the short chain branching distribution, arising from $\alpha$-olefin copolymerization, are relatively broad compared to homogeneous linear ethylene polymers. Heterogeneous linear ethylene polymers can be made in a solution, slurry, or gas phase process using a Ziegler-Natta catalyst, and are well known to those skilled in the art. For example, see U.S. Patent No. 4,339,507.

Mixtures of heterogeneous and homogeneous ethylene polymers ("composite polyethylene") can also be used for the film compositions of the present invention, such as those disclosed by Kolthammer et al., in U.S Patents 5,844,045; 5,869,575; and 6,448,341.

The ethylene-based polymers may have a combination of two or more embodiments as described herein.

B. Propylene-based Polymers for Use in The Inner and Skin layers

Suitable propylene-based polymers for use in the inner or skin layers include propylene homopolymers, propylene interpolymers, as well as reactor copolymers of polypropylene (RCPP), which can contain 1 to 20 weight percent ethylene or an $\alpha$-olefin comonomer of 4 to 20 carbon atoms. The polypropylene homopolymer can be isotactic, syndiotactic or atactic polypropylene. The propylene interpolymer can be a random or block copolymer, or a propylene-based terpolymer.

The propylene-based polymer is preferably a semi-crystalline polymer. A crystalline propylene-based polymer typically has at least 90 mole percent of its repeating units derived from propylene, preferably at least 97 percent, more preferably at least 99 percent.

Suitable comonomers for polymerizing with propylene include ethylene, 1-butene, 1-pentene, 1-hexene, 1-heptene, 1-octene, 1-nonene, 1-decene, 1-unidecene, 1dodecene, as well as 4-methyl-1-pentene, 4-methyl-1-hexene, 5-methyl-1-hexene, vinylcyclohexane, and styrene. The preferred comonomers include ethylene, 1-butene, 1-hexene, and 1-octene, and more preferably ethylene.

Optionally, the propylene-based polymer comprises monomeric units derived from monomers having at least two double bonds which are preferably dienes or trienes. Suitable diene and triene comonomers include 7-methyl-1,6-octadiene; 3,7-dimethyl-1, 6-octadiene; 5,7- dimethyl-1,6-octadiene; 3,7,11-trimethyl-1,6,1 0-octatriene; 6-methyl-1,5-heptadiene; 1,3-butadiene; 1,6-heptadiene; 1,7-octadiene; 1,8-nonadiene; 1,9-decadiene; 1,10-undecadiene; norbornene; tetracyclododecene; or mixtures thereof; and preferably butadiene; hexadienes; and octadienes; and most preferably 1,4-hexadiene; 1,9-decadiene; 4-methyl-1,4-hexadiene; 5-methyl-1,4-hexadiene; dicyclopentadiene; and 5-ethylidene-2-norbornene (ENB).

Additional unsaturated comonomers include 1,3-butadiene, 1,3-pentadiene, norbornadiene, and dicyclopentadiene; C8-40 vinyl aromatic compounds, including sytrene, o-, m-, and p-methylstyrene, divinylbenzene, vinylbiphenyl, vinylnapthalene; and halogen-substituted C8-40 vinyl aromatic compounds, such as chlorostyrene and fluorostyrene.

Suitable propylene copolymers include propylene/ethylene, propylene/1-butene, propylene/1-hexene, propylene/4-methyl-1-pentene, propylene/1-octene, propylene/ethylene/1-butene, propylene/ethylene/ENB, propylene/ethylene/1-hexene, propylene/ethylene/1-octene, propylene/styrene, and propylene/ethylene/styrene.

Suitable propylene-based polymers are formed by means within the skill in the art, for example, using single site catalysts (metallocene or constrained geometry) or Ziegler Natta catalysts. The propylene and optional comonomers, such as ethylene or alpha-olefin monomers are polymerized under conditions within the skill in the art, for instance, as disclosed by Galli, et al., Angew. Macromol. Chem., Vol. 120, 73 (1984), or by E.P. Moore, et al. in Polypropylene Handbook, Hanser Publishers, New York, 1996, particularly pages 11-98. Polypropylene polymers include Shell's KF 6100 homopolymer polypropylene; Solvay's KS 4005 polypropylene copolymer; Solvay's KS 300 polypropylene terpolymer; and INSPIRE™ polypropylene resins available from The Dow Chemical Company.

The propylene-based polymer used in the present invention may be of any molecular weight distribution (MWD). Propylene-based polymers of broad or narrow MWD are formed by means within the skill in the art. Propylene-based polymers having a narrow MWD can be advantageously provided by visbreaking or by manufacturing reactor grades (non visbroken) using single-site catalysis, or by both methods.

The propylene-based polymer can be reactor-grade, visbroken, branched or coupled to provide increased nucleation and crystallization rates. The term "coupled" is used herein to refer to propylene-based polymers which are rheology-modified, such that they exhibit a change in the resistance of the molten polymer to flow during extrusion (for example, in the extruder immediately prior to the annular die). Whereas "visbroken" is in the direction of chain-scission, "coupled" is in the direction of crosslinking or networking. As an example of coupling, a couple agent (for example, an azide compound) is added to a relatively high melt flow rate polypropylene polymer, such that after extrusion, the resultant polypropylene polymer composition attains a substantially lower melt flow rate than the initial melt flow rate. Preferably, for coupled or branched polypropylene, the ratio of subsequent MFR to initial MFR is less than, or equal, to 0.7:1, more preferably less than, or equal to, 0.2:1.

A suitable branched propylene-based polymers for use in the present invention are commercially available, for instance from Montell North America, under the trade designations Profax PF-611 and PF-814. Alternatively, suitable branched or coupled propylene-based polymers can be prepared by means, within the skill in the art, such as by peroxide or electron-beam treatment, for instance as disclosed by DeNicola et al. in U.S. Patent No. 5,414,027 (the use of high energy (ionizing) radiation in a reduced oxygen atmosphere); EP 0 190 889 to Himont (electron beam irradiation of isotactic polypropylene at lower temperatures); US Patent No. 5,464,907 (Akzo Nobel NV); EP 0 754 711 Solvay (peroxide treatment); and US Patent Application No. 09/133,576, filed August 13, 1998 (azide coupling agents).

Suitable propylene/α-olefin polymers, containing at least 50 mole percent polymerized propylene, fall within the invention. Suitable polypropylene base polymers include VERSIFY™ polymers (The Dow Chemical Company) and VISTAMAXX™ polymers (ExxonMobil Chemical Co.), LICOCENE™ polymers (Clariant), EASTOFLEX™ polymers (Eastman Chemical Co.), REXTAC™ polymers (Hunstman), and VESTOPLAST™ polymers (Degussa). Other suitable polymers include propylene-α-olefins block copolymers and interpolymers, and other propylene-based block copolymers and interpolymers known in the art.

Preferred comonomers include, but are not limited to, ethylene, isobutylene, 1-butene, 1-pentene, 1-hexene, 3-methyl-1-pentene, 4-methyl-1-pentene, 1-octene, nonconjugated dienes, polyenes, butadienes, isoprenes, pentadienes, hexadienes (for example, 1,4-hexadiene), octadienes, styrene, halo-substituted styrene, alkylsubstituted styrene, tetrafluoroethylenes, vinylbenzocyclobutene, naphthenics, cycloalkenes (for example, cyclopentene, cyclohexene, cyclooctene), and mixtures thereof. Typically and preferably, the comonomer is a C2 or a C4-C20 α-olefin. Preferred comonomers include ethylene, 1-butene, 1-pentene, 1-hexene, 1-heptene and 1-octene, and more preferably include ethylene, 1-butene, 1-hexene and 1-octene.

In one embodiment, the propylene-based polymer is a propylene/α-olefin interpolymer or a propylene/ethylene interpolymer, which each has a molecular weight distribution less than, or equal to, 5, and preferably less than, or equal to, 4, and more preferably less than, or equal to 3. More preferably the propylene/α-olefin interpolymer has a molecular weight distribution from 1 to 5, or from 1.05 to 5, and more preferably from 1 to 4, or from 1.05 to 4 and more preferably from 1 to 3, or from 1.05 to 3. In another embodiment, the molecular weight distribution is less than about 3.5, preferably less than about 3.0, more preferably less than about 2.8, more preferably less than about 2.5, and most preferably less than about 2.3. All individual values and subranges from 1 to 5, or from 1.05 to 5, are included herein and disclosed herein.

In another embodiment, the propylene-based polymers comprise units derived from propylene in an amount of at least 60, preferably at least 80 and more preferably at least 85, weight percent of the polymer. The typical amount of units derived from ethylene in propylene/ethylene copolymers is at least 0.1, preferably at least 1 and more preferably at least 5 weight percent, and the maximum amount of units derived from ethylene present in these copolymers is typically not in excess of 35, preferably not in excess of 30 and more preferably not in excess of 20, weight percent of the interpolymer. The amount of units derived from the unsaturated comonomer(s), if present, is typically at least

0.01, preferably at least 1, and more preferably at least 5, weight percent, and the typical maximum amount of units derived from the unsaturated comonomer(s) typically does not exceed 35, preferably it does not exceed 30 and more preferably it does not exceed 20, weight percent of the interpolymer. The combined total of units derived from ethylene and any unsaturated comonomer typically does not exceed 40, preferably it does not exceed 30 and more preferably it does not exceed 20, weight percent of the copolymer.

In another embodiment, the propylene-based interpolymer comprises propylene and one or more unsaturated comonomers (other than ethylene), and typically comprise units derived from propylene in an amount of at least 60, preferably at least 70 and more preferably at least 80, weight percent of the copolymer. The one or more unsaturated comonomers of the copolymer comprise at least 0.1, preferably at least 1 and more preferably at least 3, weight percent, and the typical maximum amount of unsaturated comonomer does not exceed 40, and preferably it does not exceed 30, weight percent of the copolymer.

In one embodiment, certain propylene-based polymers, and especially certain propylene/ethylene interpolymers, can be made using a metal-centered, heteroaryl ligand catalyst in combination with one or more activators, for example, an alumoxane. In certain embodiments, the metal is one or more of hafnium and zirconium. More specifically, in certain embodiments of the catalyst, the use of a hafnium metal has been found to be preferred as compared to a zirconium metal for heteroaryl ligand catalysts. The catalysts in certain embodiments are compositions comprising the ligand and metal precursor, and, optionally, may additionally include an activator, combination of activators or activator package.

The catalysts used to make the propylene-based polymers additionally include catalysts comprising ancillary ligand-hafnium complexes, ancillary ligand-zirconium complexes and optionally activators, which catalyze polymerization and copolymerization reactions, particularly with monomers that are olefins, diolefins or other unsaturated compounds. Zirconium complexes, hafnium complexes, compositions can be used. The metal-ligand complexes may be in a neutral or charged state. The ligand to metal ratio may also vary, the exact ratio being dependent on the nature of the ligand and metal-ligand complex. The metal-ligand complex or complexes may take different forms, for example, they may be monomeric, dimeric, or of an even higher order. Suitable catalyst structures and associated ligands are described in U.S. Patent 6,919,407, column 16, line 6 to column 41, line 23.

In a further embodiment, the propylene-based polymer comprises at least 50 weight percent, preferably greater than 50 weight percent, propylene (based on the total amount of polymerizable monomers) and at least 5 weight percent ethylene (based on the total amount of polymerizable monomer), and has 13C NMR peaks, corresponding to a region error, at about 14.6 and 15.7 ppm, and the peaks are of about equal intensity (for example, see U.S. Patent 6,919,407, column 12, line 64 to column 15, line 51.

The propylene-based polymers can be made by any convenient polymerization process. In one embodiment, the process reagents, that is, (i) propylene, (ii) ethylene and/or one or more unsaturated comonomers, (iii) catalyst, and, (iv) optionally, solvent and/or a molecular weight regulator (for example, hydrogen), are fed to a single reaction vessel of any suitable design, for example, stirred tank, loop, or fluidized- bed. The process reagents are contacted within the reaction vessel under appropriate conditions (for example, solution, slurry, gas phase, suspension, high pressure) to form the desired polymer, and then the output of the reactor is recovered for post-reaction processing. All of the output from the reactor can be recovered at one time (as in the case of a single pass or batch reactor), or it can be recovered in the form of a bleed stream, which forms only a part, typically a minor part, of the reaction mass (as in the case of a continuous process reactor, in which an output stream is bled from the reactor, at the same rate at which reagents are added to maintain the polymerization at steady- state conditions). "Reaction mass" means the contents within a reactor, typically during, or subsequent to, polymerization. The reaction mass includes reactants, solvent (if any), catalyst, and products and by- products. The recovered solvent and unreacted monomers can be recycled back to the reaction vessel. Suitable polymerization conditions are described in U.S. Patent 6,919,407, column 41, line 23 to column 45, line 43.

The propylene-based polymers may have a combination of two or more embodiments as described herein.

C. Additives

Stabilizer and antioxidants may be added to a resin formulation to protect the resin from degradation, caused by reactions with oxygen, which are induced by such things as heat, light or residual catalyst from the raw materials. Antioxidants are commercially available from Ciba-Geigy, located in Hawthorn, N.Y., and include Irganox® 565, 1010 and 1076 which are hindered phenolic antioxidants. These are primary antioxidants, which act as free radical scavengers, and may be used alone or in combination with other antioxidants, such as phosphite antioxidants, like Irgafos® 168, available from Ciba-Geigy. Phosphite antioxidants are considered secondary antioxidants, are not generally used alone, and are primarily used as peroxide decomposers. Other available antioxidants include, but are not limited to, Cyanox® LTDP, available from Cytec Industries in Stamford, Conn., and Ethanox® 1330, available from Albemarle Corp. in Baton Rouge, Louisiana. Many other antioxidants are available for use by themselves, or in combination with other such antioxidants. Other resin additives include, but are not limited to, ultraviolet light absorbers, antistatic agents, pigments, dyes, nucleating agents, fillers, slip agents, fire retardants, plasticizers, processing aids, lubricants, stabilizers, smoke inhibitors, viscosity control agents and anti-blocking agents.

A composition used to form a film layer may comprise one or more additives as described above.

In one embodiment, a film composition comprises at least one additive selected from the group consisting of antioxidants, ultraviolet light absorbers, antistatic agents, pigments, dyes, nucleating agents, fillers, slip agents, fire retardants, plasticizers, processing aids, lubricants, stabilizes, smoke inhibitors, viscosity control agents, anti-blocking agents, and combinations thereof.

In one embodiment, a film composition comprises at least one additive selected from the group consisting of antioxidants, ultraviolet light absorbers, antistatic agents, pigments, dyes, nucleating agents, fillers, slip agents, fire retardants, plasticizers, processing aids, anti-blocking agents, and combinations thereof.

**III. Multilayered Films**

A. Skin (Outer) Layer

Suitable polymers for use in the skin layer include ethylene-based homopolymers and ethylene-based interpolymers and propylene-based homopolymers and propylene-based interpolymers. Examples of such polymers include, but are not limited to, ethylene-based polymers, such as, DOWLEX™ and ELITE™, and propylene-based polymers, such as, INSPIRE™ (all from The DOW Chemical Company). Each skin layer may contain one polymer, or two or more polymers, such as a polymer blend, like ULDPE and LLDPE, two different LLDPE's, or HDPE and ULDPE.

The specific properties of a skin layer will depend on the polymer or polymer blend used. The properties provided below are representative of polyolefin resins and other polymer resins that fall within the noted properties. The properties provided below are not intended to limit the scope of this invention, in terms of the range of polyolefins and other polymers and blends suitable for use in the invention.

In one embodiment, the polymer used in the skin layer, as a single component or as a blend component, will typically be characterized by a melt index ($I_2$), at 190°C, and 2.16 kg load (ASTM D-1238), greater than, or equal to, 0.1 g/10 min, preferably greater than, or equal to, 0.4 g/10 min, and more preferably greater than, or equal to, 0.7 g/10 min. In another embodiment, the polymer used in the skin layer, as a single component or as a blend component, will typically be characterized by a melt index ($I_2$), at 190°C and 2.16 kg load (ASTM D-1238), less than, or equal to, 10 g/10 min, preferably less than, or equal to, 3 g/10 min, and more preferably less than, or equal to, 2 g/10 min. In a further embodiment, the polymer used in the skin layer, as a single component or a blend component, is an ethylene/α-olefin interpolymer, and in a further embodiment, the $\alpha$-olefin is selected from propylene, 1-butene, 1-hexene or 1-octene.

In another embodiment, the polymer used in the skin layer, as a single component or as a blend component, will typically be characterized by a melt index ($I_2$), at 190°C and 2.16 kg load (ASTM D-1238), from 0.01 to 40 g/10 min, preferably from 0.1 to 20 g/10 min, more preferably from 0.2 to 10 g/10 min, and even more preferably from 0.5 to 5 g/10 min. All individual values and subranges from 0.01 to 40 g/10 min are included herein and disclosed herein. In a further embodiment, the polymer used in the skin layer, as a single component or a blend component, is an ethylene/$\alpha$-olefin interpolymer, and in a further embodiment, the $\alpha$-olefin is selected from propylene, 1-butene, 1-hexene or 1-octene.

In another embodiment, the polymer used in the skin layer, as a single component or as a blend component, will typically be characterized by a melt flow rate (MFR), at 230°C and 2.16 kg load (ASTM D-1238), greater than, or equal to, 0.1 g/10 min, preferably greater than, or equal to, 1 g/10 min, and more preferably greater than, or equal to, 2 g/10 min. In another embodiment, the polymer used in the skin layer, as a single component or as a blend component, will typically be characterized by a melt flow rate (MFR), at 230°C and 2.16 kg load (ASTM D-1238), less than, or equal to, 20 g/10 min, preferably less than, or equal to, 10 g/10 min, and more preferably less than, or equal to, 5 g/10 min. In a further embodiment, the polymer used in the skin layer, as a single component or a blend component, is a propylene-based polymer, and more preferably a propylene homopolymer or propylene/ethylene interpolymer. In one embodiment, the propylene-based polymer is a propylene homopolymer. In another embodiment, the propylene-based polymer is a propylene/ethylene interpolymer.

In another embodiment, the polymer used in the skin layer, as a single component or as a blend component, will typically be characterized by a melt flow rate, at 230°C and 2.16 kg load (ASTM D-1238), from 0.1 to 50 g/10 min, preferably from 0.2 to 25 g/10 min, more preferably from 0.5 to 15 g/10 min, and even more preferably from 1 to 10 g/10 min. All individual values and subranges from 0.1 to 50 g/10 min are included herein and disclosed herein. In a further embodiment, the polymer used in the skin layer, as a single component or a blend component, is a propylene-based polymer, and more preferably a propylene homopolymer or propylene/ethylene interpolymer. In one embodiment, the propylene-based polymer is a propylene homopolymer. In another embodiment, the propylene-based polymer is a propylene/ethylene interpolymer.

In another embodiment, the polymer used in the skin layer, as a single component or as a blend component, will typically have a density greater than, or equal to, 0.900 g/cc, preferably greater than, or equal to, 0.910 g/cc, and more preferably greater than, or equal to, 0.917 g/cc. In another embodiment, the polymer used in the skin layer, as a single component or as a blend component, will typically have a density less than, or equal to, 0.950 g/cc, preferably less than, or equal to, 0.940 g/cc, and more preferably less than, or equal to, 0.926 g/cc. In a further embodiment, the polymer used in the skin layer, as a single component or a blend component, is an ethylene/$\alpha$-olefin interpolymer, and in a further embodiment, the $\alpha$-olefin is selected from propylene, 1-butene, 1-hexene or 1-octene. In another embodiment, the polymer used in the skin layer, as a single component or a blend component, is a propylene-based polymer, and more preferably a propylene homopolymer or propylene/ethylene interpolymer. In one embodiment, the propylene-based polymer is a propylene homopolymer. In another embodiment, the propylene-based polymer is a propylene/ethylene interpolymer.

In another embodiment, the polymer used in the skin layer, as a single component or as a blend component, will typically have a density from 0.890 g/cc to 0.950 g/cc, and preferably from 0.900 g/cc to 0.940 g/cc, and more preferably from 0.910 g/cc to 0.930 g/cc. All individual values and subranges from 0.890 g/cm$^3$ to 0.950 g/cc are included herein and disclosed herein. In a further embodiment, the polymer used in the skin layer, as a single component or a blend component, is an ethylene/$\alpha$-olefin interpolymer, and in a further embodiment, the $\alpha$-olefin is selected from propylene, 1-butene, 1-hexene or 1-octene. In another embodiment, the polymer used in the skin layer, as a single component or a blend component, is a propylene-based polymer, and more preferably a propylene homopolymer or propylene/ethylene interpolymer. In one embodiment, the propylene-based polymer is a propylene homopolymer. In another embodiment, the propylene-based polymer is a propylene/ethylene interpolymer.

In another embodiment, the polymer used in the skin layer, as a single component or as a blend component, will be characterized by a weight average molecular weight (Mw) from 20,000 to 1,000,000, and all individual values and subranges there between are included herein and disclosed herein. In a further embodiment, the polymer used in the skin layer, as a single component or a blend component, is an ethylene/$\alpha$-olefin interpolymer, and in a further embodiment, the $\alpha$-olefin is selected from propylene, 1-butene, 1-hexene or 1-octene. In another embodiment, the polymer used in the skin layer, as a single component or a blend component, is a propylene-based polymer, and more preferably a propylene homopolymer or propylene/ethylene interpolymer. In one embodiment, the propylene-based polymer is a propylene homopolymer. In another embodiment, the propylene-based polymer is a propylene/ethylene interpolymer.

In another embodiment, the polymer used in the skin layer, as a single component or as a blend component, will typically have a total percent crystallinity of less than 60 percent, and preferably less than 50 percent, as measured by DSC. In a further embodiment, the polymer used in the skin layer, as a single component or a blend component, is an ethylene/$\alpha$-olefin interpolymer, and in a further embodiment, the $\alpha$-olefin is selected from propylene, 1-butene, 1-hexene or 1-octene. In another embodiment, the polymer used in the skin layer, as a single component or a blend component, is a propylene-based polymer, and more preferably a propylene homopolymer or propylene/ethylene interpolymer. In one embodiment, the propylene-based polymer is a propylene homopolymer. In another embodiment, the propylene-based polymer is a propylene/ethylene interpolymer.

In another embodiment, the polymer used in the skin layer, as a single component or as a blend component, will typically be characterized by a DSC melting point from 50°C to 250°C, preferably from 70°C to 200°C, more preferably from 100°C to 180°C, and even more preferably from 110°C to 170°C. All individual values and subranges from 50°C to 250°C are included herein and disclosed herein. In a further embodiment, the polymer used in the skin layer, as a single component or a blend component, is an ethylene/$\alpha$-olefin interpolymer, and in a further embodiment, the $\alpha$-olefin is selected from propylene, 1-butene, 1-hexene or 1-octene. In another embodiment, the polymer used in the skin layer, as a single component or a blend component, is a propylene-based polymer, and more preferably a propylene homopolymer or propylene/ethylene interpolymer. In one embodiment, the propylene-based polymer is a propylene homopolymer. In another embodiment, the propylene-based polymer is a propylene/ethylene interpolymer.

In another embodiment, the polymer used in the skin layer, as a single component or as a blend component, will typically have a molecular weight distribution, $M_w/M_n$, from 1 to 20, or from 1.05 to 20, preferably from 1 to 10, or from 1.05 to 10, and more preferably from 1 to 5, or from 1.05 to 5, and even more preferably from 1.5 to 3.5. All individual values and subranges from 1 to 20, or from 1.05 to 20, are included herein and disclosed herein. In a further embodiment, the polymer used in the skin layer, as a single component or a blend component, is an ethylene/$\alpha$-olefin interpolymer, and in a further embodiment, the $\alpha$-olefin is selected from propylene, 1-butene, 1-hexene or 1-octene. In another embodiment, the polymer used in the skin layer, as a single component or a blend component, is a propylene-based polymer, and more preferably a propylene homopolymer or propylene/ethylene interpolymer. In one embodiment, the propylene-based polymer is a propylene homopolymer. In another embodiment, the propylene-based polymer is a propylene/ethylene interpolymer.

The polymer used in the skin layer, as a single component or as a blend component, will typically be present in an amount from 50 weight percent to 100 weight percent, based on the total weight of the components of the skin layer. All individual values and subranges from 50 weight percent to 100 weight percent are included herein and disclosed herein. In a further embodiment, the polymer used in the skin layer, as a single component or a blend component, is an ethylene/$\alpha$-olefin interpolymer, and in a further embodiment, the $\alpha$-olefin is selected from propylene, 1-butene, 1-hexene or 1-octene. In another embodiment, the polymer used in the skin layer, as a single component or a blend component, is a propylene-based polymer, and more preferably a propylene homopolymer or propylene/ethylene interpolymer. In one embodiment, the propylene-based polymer is a propylene homopolymer. In another embodiment, the propylene-based polymer is a propylene/ethylene interpolymer.

The polymer used in the skin layer, as a single component or as a blend component, may have a combination of two or more respective properties of the above embodiments.

B. Inner Layer - Soft Core

Examples of suitable polymers for this layer include, but are not limited to, polyethylene-based polymers, such as, AFFINITY™ and FLEXOMER™, and polypropylene-based polymers, such as VERSIFY™ polymers (all from The DOW Chemical Company). Polymer systems other than polyofefin based systems may also be used for the inner layer. The inner layer may contain one polymer or two or more polymers, such as a polymer blend.

The specific properties of the inner layer will depend on the polymer or polymer blend used. The properties provided below are representative of polyolefin resins and other polymer resins that fall within the noted properties. The properties provided below are not intended to limit the scope of this invention, in terms of the range of polyolefins and other polymers and blends suitable for use in the invention.

In one embodiment, the polymer used in the inner layer, as a single component or as a blend component, will typically be characterized by a melt index ($I_2$), at 190°C and 2.16 kg load (ASTM D-1238), from 0.1 to 20 g/10 min, preferably from 0.2 to 10 g/10 min, more preferably from 0.2 to 5 g/10 min, even more preferably from 0.2 to 2 g/10 min. All individual values and subranges from 0.1 to 20 g/10 min are included herein and disclosed herein. In a further embodiment, the polymer used in the inner layer, as a single component or a blend component, is an ethylene/$\alpha$-olefin interpolymer, and in a further embodiment, the $\alpha$-olefin is selected from propylene, 1-butene, 1-hexene or 1-octene.

In another embodiment, the polymer used in the inner layer, as a single component or as a blend component, will typically be characterized by a melt flow rate (MFR), at 230°C and 2.16 kg load (ASTM D-1238) from 0.2 to 50 g/10 min, preferably from 0.5 to 20 g/10 min, more preferably from 1 to 10 g/10 min, even more preferably from 1 to 5 g/10 min. All individual values and subranges from 0.2 to 50 g/10 min are included herein and disclosed herein. In a further embodiment, the polymer used in the inner layer, as a single component or a blend component, is a propylene-based polymer, and more preferably a propylene homopolymer or propylene/ethylene interpolymer. In one embodiment, the propylene-based polymer is a propylene homopolymer. In another embodiment, the propylene-based polymer is a propylene/ethylene interpolymer.

In another embodiment, the polymer used in the inner layer, as a single component or as a blend component, will typically have a density from 0.840 g/cc to 0.920 g/cc, and preferably from 0.850 g/cc to 0.910 g/cc, and more preferably from 0.860 g/cc to 0.900 g/cc. All individual values and subranges from 0.840 g/cc to 0.920 g/cc are included herein and disclosed herein. In a further embodiment, the polymer used in the inner layer, as a single component or a blend component, is an ethylene/$\alpha$-olefin interpolymer, and in a further embodiment, the $\alpha$-olefin is selected from propylene, 1-butene, 1-hexene or 1-octene. In another embodiment, the polymer used in the inner layer, as a single component or a blend component, is a propylene-based polymer, and more preferably a propylene homopolymer or propylene/ethylene interpolymer. In one embodiment, the propylene-based polymer is a propylene homopolymer. In another embodiment, the propylene-based polymer is a propylene/ethylene interpolymer.

In another embodiment, the polymer used in the inner layer, as a single component or as a blend component, will typically be substantially amorphous, and have a total percent crystallinity of less than 50 percent, and preferably less than 30 percent, as measured by DSC. In a further embodiment, the polymer used in the inner layer, as a single component or a blend component, is an ethylene/$\alpha$-olefin interpolymer, and in a further embodiment, the $\alpha$-olefin is selected from propylene, 1-butene, 1-hexene or 1-octene. In another embodiment, the polymer used in the inner layer, as a single component or a blend component, is a propylene-based polymer, and more preferably a propylene homopolymer or propylene/ethylene interpolymer. In one embodiment, the propylene-based polymer is a propylene homopolymer. In another embodiment, the propylene-based polymer is a propylene/ethylene interpolymer.

In another embodiment, the polymer used in the inner layer, as a single component or as a blend component, will typically be characterized by a DSC melting point, or melting range, from 30°C to 150°C, preferably from 40°C to 120°C, more preferably from 50°C to 110°C, and most preferably from 60°C to 100°C. All individual values and subranges from 30°C to 150°C are included herein and disclosed herein. In a further embodiment, the polymer used in the inner layer, as a single component or a blend component, is an ethylene/$\alpha$-olefin interpolymer, and in a further embodiment, the $\alpha$-olefin is selected from propylene, 1-butene, 1-hexene or 1-octene. In another embodiment, the polymer used in the inner layer, as a single component or a blend component, is a propylene-based polymer, and more preferably a propylene homopolymer or propylene/ethylene interpolymer. In one embodiment, the propylene-based polymer is a propylene homopolymer. In another embodiment, the propylene-based polymer is a propylene/ethylene interpolymer.

In another embodiment, the polymer used in the inner layer, as a single component or as a blend component, will typically have a weight average molecular weight (Mw) from 10,000 to 200,000 g/mol, and all individual values and subranges there between are included herein and disclosed herein. In a further embodiment, the polymer used in the inner layer, as a single component or a blend component, is an ethylene/$\alpha$-olefin interpolymer, and in a further embodiment, the $\alpha$-olefin is selected from propylene, 1-butene, 1-hexene or 1-octene. In another embodiment, the polymer used in the inner layer, as a single component or a blend component, is a propylene-based polymer, and more preferably a propylene homopolymer or propylene/ethylene interpolymer. In one embodiment, the propylene-based polymer is a propylene homopolymer. In another embodiment, the propylene-based polymer is a propylene/ethylene interpolymer.

In another embodiment, the polymer used in the inner layer, as a single component or as a blend component, will typically have a molecular weight distribution, $M_w/M_n$, from 1 to 20, or from 1.05 to 20, preferably from 1 to 10, or from 1.05 to 10, and more preferably from 1 to 5, or from 1.05 to 5, and even more preferably from 1.5 to 3.5. All individual values and subranges from 1 to 20, or from 1.05 to 20, are included herein and disclosed herein. In a further embodiment, the polymer used in the inner layer, as a single component or a blend component, is an ethylene/$\alpha$-olefin interpolymer, and in a further embodiment, the $\alpha$-olefin is selected from propylene, 1-butene, 1-hexene or 1-octene. In another embodiment, the polymer used in the inner layer, as a single component or a blend component, is a propylene-based polymer, and more preferably a propylene homopolymer or propylene/ethylene interpolymer. In one embodiment, the propylene-based polymer is a propylene homopolymer. In another embodiment, the propylene-based polymer is a propylene/ethylene interpolymer.

The polymer used in the inner layer, as a single component or as a blend component, is present in an amount from 50 weight percent to 100 weight percent, based on the total weight of the components of the inner layer. All individual values and subranges from 50 weight percent to 100 weight percent are included herein and disclosed herein. In a further embodiment, the polymer used in the inner layer, as a single component or a blend component, is an ethylene/$\alpha$-olefin interpolymer, and in a further embodiment, the $\alpha$-olefin is selected from propylene, 1-butene, 1-hexene or 1-octene. In another embodiment, the polymer used in the inner layer, as a single component or a blend component, is a propylene-based polymer, and more preferably a propylene homopolymer or propylene/ethylene interpolymer. In one embodiment, the propylene-based polymer is a propylene homopolymer. In another embodiment, the propylene-based polymer is a propylene/ethylene interpolymer.

In another embodiment, the polymer used in the inner layer, as a single component or as a blend component, has a MD tensile, 2 percent secant modulus at least five times lower, preferably at least six times lower, and more preferably at least seven times lower, than the MD tensile, 2 percent secant modulus of an outer (skin) layer.

In another embodiment, the polymer used in the inner layer, as a single component or as a blend component, is a homogeneously branched linear ethylene/α-olefin interpolymer or a homogeneously branched substantially linear ethylene/α-olefin interpolymer, and preferably a homogeneously branched substantially linear ethylene/α-olefin interpolymer.

The polymer used in the inner layer, as a single component or as a blend component, may have a combination of two or more respective properties of the above embodiments.

C. Inner Layer - Stiff Core

Examples of suitable polymers for this layer include, but are not limited to, high density and medium density polyethylene-based polymers, such as, HDPE and MDPE; polypropylene homopolymers and propylene interpolymers. Each inner layer may contain one polymer or two or more polymers, such as a polymer blend.

The specific properties of an inner layer will depend on the polymer or polymer blend used. The properties provided below are representative of polyolefin resins and other polymer resins that fall within the noted properties. The properties provided below are not intended to limit the scope of this invention, in terms of the range of polyolefins, and other polymers and blends, suitable for use in the invention.

In one embodiment, the polymer used in the inner layer, as a single component or as a blend component, will typically be characterized by a melt index ($I_2$), at 190°C and 2.16 kg load (ASTM D-1238), from 0.01 to 5 g/10 min, preferably from 0.05 to 4 g/10 min, more preferably from 0.1 to 3 g/10 min, and even more preferably from 0.1 to 2 g/10 min. All individual values and subranges from 0.01 to 5 g/10 min are included herein and disclosed herein. In a further embodiment, the polymer used in the inner layer, as a single component or a blend component, is an ethylene/α-olefin interpolymer, and in a further embodiment, the α-olefin is selected from propylene, 1-butene, 1-hexene or 1-octene.

In another embodiment, the polymer used in the inner layer, as a single component or as a blend component, will typically be characterized by a melt flow rate, at 230°C and 2.16 kg load (ASTM D-1238), from 0.01 to 10 g/10 min, preferably from 0.05 to 8 g/10 min, more preferably from 0.1 to 5 g/10 min, and even more preferably from 0.5 to 5 g/10 min. All individual values and subranges from 0.01 to 10 g/10 min are included herein and disclosed herein. In a further embodiment, the polymer used in the inner layer, as a single component or a blend component, is a propylene-based polymer, and more preferably a propylene homopolymer or propylene/ethylene interpolymer. In one embodiment, the propylene-based polymer is a propylene homopolymer. In another embodiment, the propylene-based polymer is a propylene/ethylene interpolymer.

In another embodiment, the polymer used in the inner layer, as a single component or as a blend component, will typically have a density greater than, or equal to, 0.930 g/cc, preferably greater than, or equal to, 0.935 g/cc, and more preferably greater than, or equal to, 0.940 g/cc. In another embodiment, the polymer used in the inner layer, as a single component or as a blend component, will typically have a density less than, or equal to, 0.970 g/cc, preferably less than, or equal to, 0.960 g/cc, and more preferably less than, or equal to, 0.950 g/cc. In a further embodiment, the polymer used in the inner layer, as a single component or a blend component, is an ethylene/α-olefin interpolymer, and in a further embodiment, the α-olefin is selected from propylene, 1-butene, 1-hexene or 1-octene

In another embodiment, the polymer used in the inner layer, as a single component or as a blend component, has a density less than, or equal to, 0.93 g/cc, preferably less than, or equal to, 0.92 g/cc, and more preferably less than, or equal to, 0.91 g/cc. In another embodiment, the polymer used in the inner layer, as a single component or as a blend component, has a density greater than, or equal to, 0.86 g/cc, preferably greater than, or equal to, 0.87 g/cc, and more preferably greater than, or equal to, 0.88 g/cc. In one embodiment, the polymer is a propylene-based polymer. In a further embodiment, the polymer is a propylene homopolymer. In another embodiment, the polymer is a propylene/ethylene interpolymer.

In another embodiment, the polymer used in the inner layer, as a single component or as a blend component, will typically be characterized by a DSC melting point from 50°C to 250°C, preferably from 70°C to 200°C, more preferably from 100°C to 180°C, and even more preferably from 120°C to 170°C. All individual values and subranges from 50°C to 250°C are included herein and disclosed herein. In a further embodiment, the polymer used in the inner layer, as a single component or a blend component, is an ethylene/α-olefin interpolymer, and in a further embodiment, the α-olefin is selected from propylene, 1-butene, 1-hexene or 1-octene. In another embodiment, the polymer used in the inner layer, as a single component or a blend component, is a propylene-based polymer, and more preferably a propylene homopolymer or propylene/ethylene interpolymer. In one embodiment, the propylene-based polymer is a propylene homopolymer. In another embodiment, the propylene-based polymer is a propylene/ethylene interpolymer.

In another embodiment, the polymer used in the inner layer, as a single component or as a blend component, will be characterized by a weight average molecular weight (Mw) from 20,000 to 1,000,000, and all individual values, and subranges there between, are included herein and disclosed herein. In a further embodiment, the polymer used in the inner layer, as a single component or a blend component, is an ethylene/α-olefin interpolymer, and in a further embodiment, the α-olefin is selected from propylene, 1-butene, 1-hexene or 1-octene. In another embodiment, the polymer used in the inner layer, as a single component or a blend component, is a propylene-based polymer, and more preferably a propylene homopolymer or propylene/ethylene interpolymer. In one embodiment, the propylene-based polymer is a propylene homopolymer. In another embodiment, the propylene-based polymer is a propylene/ethylene interpolymer.

In another embodiment, the polymer used in the inner layer, as a single component or as a blend component, will typically have a total percent crystallinity of less than 60 percent, and preferably less than 50 percent, as measured by DSC. In a further embodiment, the polymer used in the inner layer, as a single component or a blend component, is an ethylene/$\alpha$-olefin interpolymer, and in a further embodiment, the $\alpha$-olefin is selected from propylene, 1-butene, 1-hexene or 1-octene. In another embodiment, the polymer used in the inner layer, as a single component or a blend component, is a propylene-based polymer, and more preferably a propylene homopolymer or propylene/ethylene interpolymer. In one embodiment, the propylene-based polymer is a propylene homopolymer. In another embodiment, the propylene-based polymer is a propylene/ethylene interpolymer.

In another embodiment, the polymer used in the inner layer, as a single component or as a blend component, will typically have a molecular weight distribution, $M_w/M_n$, from 1 to 20, or from 1.05 to 20, preferably from 1 to 10, or from 1.05 to 10, and more preferably from 1 to 5, or from 1.05 to 5, and even more preferably from 1.5 to 3.5. All individual values and subranges from 1 to 20, or from 1.05 to 20, are included herein and disclosed herein. In a further embodiment, the polymer used in the inner layer, as a single component or a blend component, is an ethylene/$\alpha$-olefin interpolymer, and in a further embodiment, the $\alpha$-olefin is selected from propylene, 1-butene, 1-hexene or 1-octene. In another embodiment, the polymer used in the inner layer, as a single component or a blend component, is a propylene-based polymer, and more preferably a propylene homopolymer or a propylene/ethylene interpolymer. In one embodiment, the propylene-based polymer is a propylene homopolymer. In another embodiment, the propylene-based polymer is a propylene/ethylene interpolymer.

The polymer used in the inner layer, as a single component or as a blend component, will typically be present in an amount from 50 weight percent to 100 weight percent, based on the total weight of the components of the inner layer. All individual values and subranges from 50 weight percent to 100 weight percent are included herein and disclosed herein. In a further embodiment, the polymer used in the inner layer, as a single component or a blend component, is an ethylene/$\alpha$-olefin interpolymer, and in a further embodiment, the $\alpha$-olefin is selected from propylene, 1-butene, 1-hexene or 1-octene. In another embodiment, the polymer used in the inner layer, as a single component or a blend component, is a propylene-based polymer, and more preferably a propylene homopolymer or propylene/ethylene interpolymer. In one embodiment, the propylene-based polymer is a propylene homopolymer. In another embodiment, the propylene-based polymer is a propylene/ethylene interpolymer.

In another embodiment, polymer used in the inner layer, as a single component or as a blend component has a MD tensile, 2 percent secant modulus at least two times higher, preferably at least three times higher, and more preferably at least four times higher, than the MD tensile, 2 percent secant modulus of an skin layer.

The polymer used in the inner layer, as a single component or as a blend component, may have a combination of two or more respective properties of the above embodiments.

## IV. Some Multilayered Films

The inventive films contain an inner layer that is less than, or equal to, 15 percent of the total film thickness, and preferably less than, or equal to, 10 percent of the total film thickness. In another embodiment, the inner layer is from 2 to 15 percent of the total film thickness, preferably from 5 to 15 percent of the total film thickness, and more preferably from 8 to 15 percent of the total film thickness.

The inventive films preferably contain three or five film layers. In a preferred embodiment, the two skin layers of the multilayered films are formed from the same polymer composition. In another embodiment, the multilayered film contains at least two non-contiguous inner layers, which have a sum thickness less than or equal to 20 percent of the total film thickness, preferably less than, or equal to, 15 percent of the total film thickness, and more preferably less than, or equal to, 10 percent of the total film thickness.

The inventive films preferably have a total thickness less than, or equal to, 1000 $\mu$m (microns), preferably less than, or equal to, 500 $\mu$m (microns), more preferably less than, or equal to, 100 $\mu$m (microns), and even more preferably less than, or equal to, 50 $\mu$m (microns). In another embodiment, the inventive films preferably have a total thickness greater than, or equal to, 25 $\mu$m (microns), preferably greater than, or equal to, 30 $\mu$m (microns), and more preferably greater than, or equal to, 35 $\mu$m (microns).

In one embodiment, the inventive films have outer or skins layers made of an ethylene-based polymer, of one type, or blends of two or more types, or blends of polyethylene with other polyolefins. In a preferred embodiment, the two outer layers are formed from the same polymer composition.

In another embodiment, the inner layer is formed from a propylene-based polymer (homopolymer, random copolymer, impact copolymer, blends thereof), or formed from an ethylene-based polymer with a density higher than 0.939 g/cc, or combinations thereof.

In another embodiment, the inner layer is formed from an ethylene/$\alpha$-olefin interpolymer with a density from 0.85 g/cc to 0.89 g/cc, and preferably from 0.855 g/cc to 0.88 g/cc. In a further embodiment, the inner layer is formed from a homogeneously branched linear ethylene/$\alpha$-olefin interpolymer or a from a homogeneously branched substantially linear ethylene/$\alpha$-olefin interpolymer.

In another embodiment, a skin layer is formed from a composition comprising an ethylene/$\alpha$-olefin interpolymer having a density from 0.910 g/cc to 0.930 g/cc, a melt index (I2) from 0.5 to 1.5 g/10 min, and an I10/I2 ratio from 5 to 10, and preferably from 6 to 9. In a further embodiment, the ethylene/$\alpha$-olefin interpolymer comprises from 5 to 20 weight percent, preferably from 10 to 15 weight percent of the $\alpha$-olefin, based on the total weight of polymerizable monomers. Preferably the $\alpha$-olefin is selected from propylene, 1-butene, 1-hexene and 1-octene, more preferably from 1-hexene and 1-octene, and most preferably 1-octene. The skin layer is particularly suited for used in combination with at least one inner layer as described below.

In another embodiment, a skin layer is formed from a composition comprising a heterogeneously branched ethylene/$\alpha$-olefin interpolymer, and a homogeneously branched ethylene/$\alpha$-olefin interpolymer, and more preferably a homogeneously branched substantially linear ethylene/$\alpha$-olefin interpolymer. In a further embodiment, the composition has a density from 0.90 to 0.94 g/cc, and preferably from 0.91 to 0.93 g/cc, and a melt index (I2) from 0.5 to 2 g/10 min, and preferably from 0.5 to 2 g/10 min. Preferably the $\alpha$-olefin is selected from propylene, 1-butene, 1-hexene and 1-octene, more preferably from 1-hexene and 1-octene, and most preferably 1-octene. In another embodiment, the composition is formed from an in-reactor blend. The skin layer is particularly suited for used in combination with at least one inner layer as described below.

In one embodiment, the inner layer is formed from a composition comprising an polyethylene homopolymer having a density from 0.940 g/cc to 0.970 g/cc, and preferably from 0.950 g/cc to 0.970 g/cc, a melt index (I2) from 1 to 5 g/10 min, and preferably from 1.5 to 4 g/10 min. In a further embodiment, the polyethylene homopolymer has a MD tensile, 2 percent secant modulus that is at least twice that of an outer (skin) layer.

In another embodiment, the inner layer is formed from a composition comprising an homogeneously branched linear or homogeneously branched substantially linear ethylene/$\alpha$-olefin interpolymer, and more preferably a homogeneously branched substantially linear ethylene/$\alpha$-olefin interpolymer. In a further embodiment, the ethylene/$\alpha$-olefin interpolymer has a density from 0.85 to 0.89 g/cc, and preferably from 0.86 to 0.88 g/cc, and a melt index (I2) from 0.1 to 2 g/10 min, and preferably from 0.2 to 1 g/10 min. Preferably the $\alpha$-olefin is selected from propylene, 1-butene, 1-hexene and 1-octene, more preferably from 1-hexene and 1-octene, and most preferably 1-octene. In a further embodiment, the homogeneously branched ethylene/$\alpha$-olefin interpolymer has a MD tensile, 2 percent secant modulus that is at least five times lower than that of an outer (skin) layer.

In another embodiment, the inner layer is formed from a composition comprising: (i) an homogeneously branched ethylene/$\alpha$-olefin interpolymer, and more preferably a homogeneously branched substantially linear ethylene/$\alpha$-olefin interpolymer; and (ii) a polyethylene homopolymer. In a further embodiment, the ethylene/$\alpha$-olefin interpolymer has a density from 0.85 to 0.89 g/cc, and preferably from 0.86 to 0.88 g/cc, and a melt index (I2) from 0.1 to 2 g/10 min, and preferably from 0.2 to 1 g/10 min. Preferably the $\alpha$-olefin is selected from propylene, 1-butene, 1-hexene and 1-octene, more preferably from 1-hexene and 1-octene, and most preferably 1-octene. In a further embodiment, the polyethylene homopolymer has a density from 0.940 g/cc to 0.970 g/cc, and preferably from 0.950 g/cc to 0.970 g/cc, a melt index (I2) from 1 to 5 g/10 min, and preferably from 1.5 to 4 g/10 min.

In another embodiment, the inner layer is formed from a composition comprising an polypropylene homopolymer having a density from 0.880 g/cc to 0.920 g/cc, and preferably from 0.890 g/cc to 0.910 g/cc, a melt flow rate (MFR) from 1 to 6 g/10 min, and preferably from 2 to 5 g/10 min. In a further embodiment, the polypropylene homopolymer has a MD tensile, 2 percent secant modulus that is at least twice that of an outer (skin) layer.

In another embodiment, the inner layer is formed from a composition comprising an propylene/ethylene interpolymer having a density from 0.840 g/cc to 0.920 g/cc, and preferably from 0.850 g/cc to 0.910 g/cc, a melt flow rate (MFR) from 1 to 5 g/10 min, and preferably from 1.5 to 4 g/10 min. In a further embodiment, the propylene/ethylene interpolymer has a MD tensile, 2 percent secant modulus that is at least five times lower than that of an outer (skin) layer.

In another embodiment, the inner layer is formed from a polyolefinic elastomers or plastomers, such as ENGAGE™ polymers, AFFINITY™ polymers or VERSIFY™ polymers (all from The Dow Chemical Company).

In the case of a lower modulus inner layer, the preferred materials are ethylene-based polymers like AFFINITY™ polymers, or propylene-based polymers like VERSIFY™ polymers. Other suitable polymers include TAFMER™ polymers supplied by the Mitsui Chemical Company, EXACT™ polymers supplied by Exxon Chemical Company, VISTAMAXX™ polymers (ExxonMobil Chemical Co.), LICOCENE™ polymers (Clariant), EASTOFLEX™ polymers (Eastman Chemical Co.), REXTAC™ polymers (Hunstman), and VESTOPLAST™ polymers (Degussa).

In the case of a higher modulus inner layer, the preferred materials are homopolymer polypropylene, random copolymer polypropylene and high density polyethylene (HDPE). Other suitable materials are impact copolymer polypropylene, polystyrene, medium density polyethylene (MDPE), cyclic olefin copolymers or polar polymers, like polyester, polycarbonate or similar. Additional polymers include impact modified polypropylene and impact modified polystyrene.

The skins can be any polyethylene based material, like DOWLEX™ polymers or ELITE™ polymers (both available from The Dow Chemical Company), or blends like, for example, DOWLEX™ and ATTANE™ (both available from The Dow Chemical Company).

The invention relates to the area of polymer extrusion technology, primarily blown films for packaging. By using a thin inner layer of a high density polyethylene, polypropylene, or other high stiffness material in a polyethylene film, one can achieve an improved and desirable combination of improved stiffness, optical properties, seal and hot tack properties and tear resistance. If the thin inner layer is an elastomeric polymer like AFFINITY™ polymers or VERSIFY™ polymers, one can achieve improved optics, tear and dart impact resistance.

As discussed above, the inner layer, or a polymer used to form said inner layer has one of the following modulii:

A) a MD tensile, 2 percent secant modulus at least two times higher, preferably at least three times higher, and more preferably at least four times higher, than the MD tensile, 2 percent secant modulus of an outer (skin) layer, or
B) a MD tensile, 2 percent secant modulus at least five times lower, preferably at least six times lower, and more preferably at least seven times lower, than the MD tensile, 2 percent secant modulus of an outer (skin) layer.

Examples of some polymers and their corresponding modulii are shown in Table 1 below.

Table 1: Polymers and Modulii

| Film* | Tensile Modulus 2% Secant, CD | Tensile Modulus 2% Secant, MD | Ratio skin/core MD modulus. |
|---|---|---|---|
| | MPa | MPa | |
| PE E51 (Skin) | 234 | 200 | |
| PE19 | 669 | 583 | 2.92 |
| 50wt% PE815 + 50wt% PE19 | | | |
| PP24 | NA | 8.4 (estimated) | |
| PE815 | NA | 16 | 0.08 |
| PP2N | 602 | 618 | 3.09 |
| PE D56 (Skin) | 238 | 198 | |
| PE19 | 669 | 583 | 2.94 |
| 50wt% PE815 + 50wt% PE19 | | | |
| PE04 (comp. example) | 147 | 140 | 0.71 |
| DOWLEX™ 2740 | 420 | 370 | 1.87 |
| *Blown films, 50 μm (ISO 527-3, ASTM D-882); see experimental section for a description of each polymer. | | | |

As seen from Table 1, the MD tensile 2 percent secant modulus of the inner or core resin (or one of its components) is at least two times higher than the skin resin, or at least five times lower than the skin resin. In the case of the blend of the PE19 and PE815, the blend has a modulus similar to the skin resin; however, the PE19 component has a considerably higher modulus than the polymer used to form the skin layer. And the PE815 considerably lower modulus than the skin layer

In another embodiment, the inner layer, or a polymer used to form said inner layer, has a delta density of more than 0.02 g/cc with respect to the skin resin. Examples of some polymers and their corresponding densities are shown in Table 2 below.

Table 2: Polymers and Densities

| Film* | Density | Δ density |
|---|---|---|
| | g/cc | g/cc |
| PE E51 (SKIN) | 0.920 | 0 |

(continued)

| Film* | Density | Δ density |
|---|---|---|
| | g/cc | g/cc |
| PE19 | 0.956 | + 0.036 |
| 50wt% PE815 + 50wt% PE19 | 0.9099 | -0.01 |
| PP24 | 0.8585 | - 0.0615 |
| PE815 | 0.868 | - 0.052 |
| PP2N | 0.900 | -0.02 |
| PE D56 (SKIN) | 0.919 | 0 |
| PE19 | 0.956 | + 0.037 |
| 50wt% PE815 + 50wt% PE19 | 0.9099 | - 0.009 |
| PE04 (comp. example) | 0.918 | - 0.002 |
| *Blown films, 50 μm (ISO 527-3, ASTM D-882); see experimental section for a description of each polymer. | | |

As seen from Table 2, preferably the inner or core resin, or at least one component in the core resin (preferably all of them), has a delta density of more than 0.02 g/cc with respect to the skin resin. For 50 μm (micron) films, MD tear resistance should preferably be at least 900 g, gloss should be at least 60, haze should be less than 10.

The film does not contain an adhesive layer between two film layers. In a preferred embodiment, the inventive film contains three layers. In a further embodiment, each outer or skin layer is formed from a composition comprising a majority amount (more than 50 weight percent, based on the total weight of the composition) of one of the following polymers, A1 and A2; and the inner layer is formed from a composition comprising a majority amount (more than 50 weight percent, based on the total weight of the composition) of one of the following suitable polymers or blends, B1, B2, B3, C1 and C2.

A1 (skin layer): a linear low density ethylene/α-olefin interpolymer, where the α-olefin is selected from propylene, 1-butene, 1-hexene or 1-octene, and preferably from 1-hexene and 1-octene, and more preferably 1-octene; and where the interpolymer has a density from 0.90 g/cc to 0.93 g/cc, and a melt index (I2) from 0.5 to 2 g/10 min, and an I10/I2 ratio from 5 to 10, and preferably from 6 to 10.

A2 (skin layer): a reactor blend comprising a linear low density ethylene/α-olefin interpolymer, where the α-olefin is preferably selected from propylene, 1-butene, 1-hexene or 1-octene, and preferably from 1-hexene and 1-octene, and more preferably 1-octene; and a homogeneously branched substantially linear ethylene/α-olefin interpolymer, where the α-olefin is preferably selected from propylene, 1-butene, 1-hexene or 1-octene, and preferably from 1-hexene and 1-octene, and more preferably 1-octene; and where the blend has a density from 0.90 g/cc to 0.94 g/cc, preferably from 0.91 g/cc to 0.93 g/cc, and a melt index (I2) from 0.5 to 3 g/10 min, and preferably from 0.5 to 2 g/10 min.

B1 (inner layer): a high density polyethylene homopolymer, where the homopolymer has a density from 0.94 g/cc to 0.97 g/cc, and preferably from 0.95 g/cc to 0.97 g/cc, and a melt index (I2) from 1 to 5 g/10 min, and preferably from 1.5 to 4 g/10 min; and a MD tensile, 2 percent secant modulus that is at least twice that of an outer layer.

B2 (inner layer): a homogeneously branched linear or homogeneously branched substantially linear ethylene/α-olefin interpolymer, where the α-olefin is selected from propylene, 1-butene, 1-hexene or 1-octene, and preferably from 1-hexene and 1-octene, and more preferably 1-octene; and where the interpolymer has a density from 0.85 g/cc to 0.89 g/cc, and preferably from 0.86 g/cc to 0.88 g/cc, and a melt index (I2) from 0.1 to 2 g/10 min, and preferably from 0.1 to 2 g/10 min, and a MD tensile, 2 percent secant modulus that is at least five times lower that of an outer layer.

B3 (inner layer): 50 weight percent B1 and 50 weight percent B2, based on the sum weights of B1 and B2.

C1 (inner layer): a propylene/ethylene copolymer with 2 to 20 weight percent ethylene, and preferably 3 to 16 weight percent ethylene, and a density from 0.84 g/cc to 0.92 g/cc, and preferably from 0.85 g/cc to 0.91 g/cc, and a melt flow rate (MFR) from 1 to 5 g/10 min, and preferably from 1.5 to 4 g/10 min, and a MD tensile, 2 percent secant modulus that is at least five times lower that of an outer (skin) layer.

C2 (inner layer): A propylene homopolymer with a density from 0.85 g/cc to 0.91 g/cc, and preferably from 0.89 g/cc to 0.91 g/cc, and a melt index (I2) from 1 to 6 g/10 min, and preferably from 2 to 5 g/10 min, and a MD tensile, 2 percent secant modulus that is at least twice that of an outer (skin) layer.

Three-layered film combinations preferably include the following: A1B1/A1; A1/B3/A1; A2/B1/A2; A2/B2/A2;

A2/B3/A2; A2/C1/A2, and A2/C2/A2.

**VI. Processes for Forming Film Compositions of the Invention**

A film composition of the invention can be prepared by selecting the thermoplastic polymers suitable for making each layer; forming a film of each layer, and bonding the layers, or coextruding or casting one or more layers. Desirably, the film layers are bonded continuously over the interfacial area between films. Preferably the film is formed using a blown film process.

For each layer, typically, it is suitable to extrusion blend the components and any additional additives, such as slip, anti-block, and polymer processing aids. The extrusion blending should be carried out in a manner, such that an adequate degree of dispersion is achieved. The parameters of extrusion blending will necessarily vary depending upon the components. However, typically the total polymer deformation, that is, mixing degree, is important, and is controlled by, for example, the screw-design and the melt temperature. The melt temperature during film forming will depend on the film components.

After extrusion blending, a film structure is formed. Film structures may be made by conventional fabrication techniques, for example, blown films, bubble extrusion, biaxial orientation processes (such as tenter frames or double bubble processes), cast/sheet extrusion, coextrusion and lamination. Conventional bubble extrusion processes (also known as hot blown film processes) are described, for example, in The Encyclopedia of Chemical Technology, Kirk-Othmer, Third Edition, John Wiley & Sons, New York, 1981, Vol. 16, pp. 416-417 and Vol. 18, pp. 191-192. Biaxial orientation film manufacturing processes, such as described in the "double bubble" process of U.S.-A-Patent No. 3,456,044 (Pahlke), and the processes described in U.S.-A-Patent No. 4,352,849 (Mueller), U.S.-A-Patent Nos. 4,820,557 and 4,837,084 (both to Warren), U.S.-A-Patent No. 4,865,902 (Golike et al.), U.S.-A-Patent No. 4,927,708 (Herran et al.), U.S.-A-Patent No. 4.952,451 (Mueller), and U.S.-A-Patent Nos. 4,963,419 and 5,059,481 (both to Lustig et al.), can also be used to make the novel film structures of this invention.

Manufacturing techniques for making structures of the invention include vertical form-fill-sealing techniques, such as that described in Packaging Machinery Operation, Chapter 8: Form-Fill-Sealing, by C. Glenn Davis (Packaging Machinery Manufacturers Institute, 2000 K Street, N.W., Washington, D.C. 20006); The Wiley Encyclopedia of Packaging Technology, Marilyn Bakker, Editor-in-chief, pp. 364-369 (John Wiley & Sons); U.S. 5,288,531 (Falla et al.), U.S. 5,721,025 (Falla et al.), U.S. 5,360,648 (Falla et al.) and U.S. 6,117,465 (Falla et al.); other film manufacturing techniques, such as that discussed in Plastic Films, Technology and Packaging Applications (Technomic Publishing Co., Inc. (1992)), by Kenton R. Osborn and Wilmer A Jenkens, pp. 39-105.

Other film manufacturing techniques are disclosed in U.S. 6,723,398 (Chum et al.). Post processing techniques, such as radiation treatment and corona treatment, especially for printing applications, can also be accomplished with the materials of the invention. Film made from the invention can also be silane cured, or the polymers used to make the inventive article can be grafted, post manufacture (such as maleic anhydride grafted polymers, including techniques disclosed in U.S. 4,927,888 (Strait et al.), U.S. 4,950,541 (Tabor et al.), U.S. 4,762,890 (Strait et al.), U.S. 5,346,963 (Hughes et al.), U.S. 4,684,576 (Tabor et al.).

After the film composition has been formed, it can be stretched. The stretching can be accomplished in any manner, conventionally used in the art. Film compositions can be sent to a converter for bag manufacturing.

In one embodiment, sheets of the film composition can be bonded by heat sealing or by use of an adhesive. Heat sealing can be effected using conventional techniques, including, but not limited to, a hot bar, impulse heating, side welding, ultrasonic welding, or other alternative heating mechanisms as discussed above.

The film compositions of the aforementioned processes may be made to any thickness depending upon the application. Typically, the multilayered films have a thickness less than, or equal to 1000 $\mu$m (microns), preferably less than, or equal to, 500 $\mu$m (microns), and more preferably less than, or equal to 100 $\mu$m (microns). In a preferred embodiment, the films have a total thickness of from 5 to 300 $\mu$m (microns), preferably from 20 to 200 $\mu$m (microns), more preferably from 40 to 100 $\mu$m (microns). The permeability of the film may also be adjusted depending upon the application.

DEFINITIONS

Any numerical range recited herein, include all values from the lower value to the upper value, in increments of one unit, provided that there is a separation of at least 2 units between any lower value and any higher value. As an example, if it is stated that the amount of a component, or a value of a compositional or physical property, such as, for example, amount of a blend component, softening temperature, melt index, etc., is between 1 and 100, it is intended that all individual values, such as, 1, 2, 3, etc., and all subranges, such as, 1 to 20, 55 to 70, 197 to 100, etc., are expressly enumerated in this specification. For values which are less than one, one unit is considered to be 0.0001, 0.001, 0.01 or 0.1, as appropriate. These are only examples of what is specifically intended, and all possible combinations of numerical values between the lowest value and the highest value enumerated, are to be considered to be expressly stated in this application. Numerical ranges have been recited, as discussed herein, in reference to film thickness, melt index, melt flow rate, weight average molecular weight, molecular weight distribution, percent crystallinity, density, and other properties.

The term "multilayered film," as used herein, refers to a film structure with more than one layer or ply.

The term "film," as used herein, refers to a film structure with at least one layer or ply. The inventive films as described herein contain at least three layers or plies.

The term "inner layer," as used herein, refers to an interior film layer that is co-contiguous with another film on each surface.

The terms "skin" or "skin layer," or "outer layer," as used herein, refers to an outermost, exterior film layer.

The term "composition," as used herein, includes a mixture of materials which comprise the composition, as well as reaction products and decomposition products formed from the materials of the composition.

The term "polymer," as used herein, refers to a polymeric compound prepared by polymerizing monomers, whether of the same or a different type. The generic term polymer thus embraces the term homopolymer, usually employed to refer to polymers prepared from only one type of monomer, and the term interpolymer as defined hereinafter.

The term "interpolymer," as used herein, refers to polymers prepared by the polymerization of at least two different types of monomers. The generic term interpolymer thus includes copolymers, usually employed to refer to polymers prepared from two different types of monomers, and polymers prepared from more than two different types of monomers.

The term "thermoplastic polymer" or "thermoplastic composition," and similar terms, mean a polymer or polymer composition that is substantially thermally extrudable or deformable, albeit relatively aggressive conditions may be required.

The terms "blend" or "polymer blend," as used herein, mean a blend of two or more polymers. Such a blend may or may not be miscible (not phase separated at molecular level). Such a blend may or may not be phase separated. Such a blend may or may not contain one or more domain configurations, as determined from transmission electron spectroscopy, light scattering, x-ray scattering, and other methods known in the art.

The term, "ethylene-based polymer," as used herein, refers to a polymer that comprises more than 50 mole percent polymerized ethylene monomer, based on the total amount of polymerizable monomer(s).

The term, "ethylene-based interpolymer," as used herein, refers to a polymer that comprises more than 50 mole percent polymerized ethylene monomer, based on the total amount of polymerizable monomers, and at least one comonomer.

The term, "ethylene/α-olefin interpolymer," as used herein, refers to a polymer that comprises more than 50 mole percent polymerized ethylene monomer, based on the total amount of polymerizable monomers, an α-olefin comonomer, and optionally, one or more other comonomers.

The term, "propylene-based polymer," as used herein, refers to a polymer that comprises more than 50 mole percent polymerized propylene monomer, based on the total amount of polymerizable monomer(s).

The term, "propylene-based interpolymer," as used herein, refers to a polymer that comprises more than 50 mole percent polymerized propylene monomer, based on the total amount of polymerizable monomers, and at least one comonomer.

The term, "propylene/α-olefin interpolymer," as used herein, refers to a polymer that comprises more than 50 mole percent polymerized propylene monomer, based on the total amount of polymerizable monomers, an α-olefin comonomer, and optionally, one or more other comonomers.

The term, "propylene/ethylene interpolymer," as used herein, refers to a polymer that comprises more than 50 mole percent polymerized propylene monomer, based on the total amount of polymerizable monomers, ethylene comonomer, and optionally, one or more other comonomers.

The term "nonpolar" polymer, as used herein, refers to a polymer that does not contain polar moieties, including, but not limited to, hydroxyl group, carbonyl group, ester group, amine group, amino group, amide group, imide group, cyano group, thiol group, and carboylic acid group. Examples of nonpolar polymers include polyolefin polymers.

The term "polar" polymer, as used herein, refers to a polymer that contains one or more polar moieties, including, but not limited to, hydroxyl group, carbonyl group, ester group, amine group, amino group, amide group, imide group, cyano group, thiol group, and carboylic acid group. Examples of polar polymers include polyesters, polyamides, polyimides, polyacrylic acids, polyethers, polyether block amides, polyetheramides, polyetherimides, polycarbonates, polyphenyleneoxides, polyvinylalcohols and polyvinylchlorides.

TEST PROCEDURES

The specific test parameters within each test will depend on the polymer or polymer blend used. Some of the tests below describe test parameters that are indicated as representative of polyolefin resins. The particular parameters of a test are not intended to limit the scope of this invention. Those skilled in the art will understand the limitations of a particular set of test parameters, and will be able to determine appropriate parameters for other types of polymers and blends.

The density of the ethylene homopolymers and ethylene-based interpolymers, and other polyolefins is measured in accordance with ASTM D-792-00, which can also be used to measure density of other polymers as noted in this test.

Melt index (I$_2$) of ethylene homopolymers and ethylene-based interpolymers are measured in accordance with ASTM D-1238-04, condition 190°C/2.16 kg. The melt flow rate (MFR) of propylene homopolymers and propylene-based interpolymers are measured in accordance with ASTM D-1238-04, condition 230°C/2.16 kg.

The average molecular weights and molecular weight distributions for ethylene-base polymers can be determined with a chromatographic system consisting of either a Polymer Laboratories Model PL-210 or a Polymer Laboratories Model PL-220. The column and carousel compartments are operated at 140°C for ethylene-based polymers. The columns are three Polymer Laboratories "10- μm (micron) Mixed-B" columns. The solvent is 1,2,4 trichlorobenzene. The samples are prepared at a concentration of 0.1 gram of polymer in 50 milliliters of solvent. The solvent used to prepare the samples contains 200 ppm of butylated hydroxytoluene (BHT). Samples are prepared by agitating lightly for 2 hours at 160°C. The injection volume is 100 microliters and the flow rate is 1.0 milliliters/minute. Calibration of the GPC column set is performed with narrow molecular weight distribution polystyrene standards, purchased from Polymer Laboratories (UK). The polystyrene standard peak molecular weights are converted to polyethylene molecular weights using the following equation (as described in Williams and Ward, J. Polym. Sci., Polym. Let., 6, 621 (1968)):

$$M_{polyethylene} = A \times (M_{polystyrene})^B \, ,$$

where M is the molecular weight, A has a value of 0.4315 and B is equal to 1.0.

Polyethylene equivalent molecular weight calculations are performed using Viscotek TriSEC software Version 3.0. The molecular weights for propylene-based polymers can be determined using Mark-Houwink ratios according to ASTM D6474.9714-1, where, for polystyrene, a = 0.702 and log K = -3.9, and for polypropylene, a = 0.725 and log K = -3.721. For propylene-based samples, the column and carousel compartments are operated at 160°C.

Percent crystallinity for ethylene-based and propylene-based polymers can be determined by differential scanning calorimetry (DSC), using a TA Instruments Model Q1000 Differential Scanning Calorimeter. A sample of around five to eight mg size is cut from the material to be tested, and placed directly in the DSC pan for analysis. For higher molecular weight materials, a thin film is normally pressed from the sample, but for some lower molecular weight samples, they may be either too sticky or flow too readily during pressing. Samples for testing may, however, be cut from plaques that are prepared, and used, for density testing. The sample is first heated at a rate of about 10°C/min to 180°C for polyethylene polymers (230°C for polypropylene polymers), and held isothermally for three minutes at that temperature to ensure complete melting (the first heat). Then the sample is cooled at a rate of 10°C per minute to -60°C for ethylene-based polymers (-40°C for propylene-based polymers), and held there isothermally for three minutes, after which, it is again heated (the second heat) at a rate of 10°C per minute until complete melting. The thermogram from this second heat is referred to as the "second heat curve." Thermograms are plotted as watts/gram versus temperature.

The percent crystallinity in the ethylene-based polymers may be calculated using heat of fusion data, generated in the second heat curve (the heat of fusion is normally computed automatically by typical commercial DSC equipment, by integration of the relevant area under the heat curve). The equation for ethylene-based polymers is:

percent Cryst. = (H$_f$ ÷ 292 J/g) x 100; and the equation for propylene-based polymers is:

percent Cryst. = (H$_f$ ÷ 165 J/g) x 100. The "percent Cryst." represents the percent crystallinity and "H$_f$" represents the heat of fusion of the polymer in Joules per gram (J/g).

The melting point(s) (T$_m$) of the polymers can be determined from the second heat curve obtained from DSC, as described above. The crystallization temperature (T$_c$) can be determined from the first cooling curve.

Film Property Measurements

The Young's modulus and 2 percent secant modulus were determined according to ISO 527-3-95. The film dimensions for "type 2 specimens" were 150 mm in length and 15 mm in width (film thickness less than 1 mm). The specimens were conditioned at 23°C, for 40 hours, ambient atmosphere, prior to testing. The clamp (with centring pins) distance on the tensile tester (INSTRON Model No. 5564) was 100 mm, and testing velocity was 5 mm/min. Five film samples were tested for each composition in cross direction (CD) and machine MD direction.

As an example, film specimens, including monolayered film specimens, were cut from blown films, prepared from conventional blown film equipment known in the art. Blown film processing parameters for a particular polymer or polymer blend, and for a particular film configuration, can be determined by those skilled in the art. Blown film fabrication parameters for some inventive films and comparative films are provided below in the experimental section (film thicknesses of 50 μm (microns)). One skilled in the art can also prepare other types of films, such as cast films, using film fabrication parameters known in the art.

Tear resistance values were obtained using an Elmendorf tear tester in compliance with the ASTM D-1922-06a. For each film sample, ten specimens were tested in both machine (MD) and transverse/cross (CD) direction.

The falling dart film impact strength was determined by means of a dart impact tester, in accordance with the ISO 7765-1-88, using method A.

Haze and clarity were measured using a BYK-Gardner haze meter according to ASTM D-1003-97 and ASTM D-1746-03, respectively. Haze is defined as the percentage of transmitted light scattered by the film more than 2.5 degrees from the normal incident beam, whereas clarity is defined as the percentage of transmitted light that is scattered less than 4 degrees.

Gloss was measured in machine direction, and under an angle of 45°, by means of a BYK-Gardner microglossmeter, in compliance with ASTM D-2457-03. Gloss is a measure of the ability of a film to reflect incident light. The measured value is related to a standard that is a black mirror. Results are shown in Tables 9A and 9B below.

EXPERIMENTAL

A series of multilayer blown film structures containing primarily PE E51 or PE D56, each as described below in Table 3, in the skins, and a thin inner layer of differentiated modulus and/or density were prepared, and tested, for various properties, as discussed below. Polymers used in the skin and inner layers are listed in Tables 3-5 below. Typically, one or more stabilizers, and optionally, other additive(s) are added to the polymer.

Table 3: Ethylene-Based Polymers Used in Skin (Outer) Layers

|  | Type | Density (g/cc) | I2 (g/10min) | I10/I2 | Comonomer | Process |
|---|---|---|---|---|---|---|
| PE E51 | PE Reactor Blend | 0.920 | 0.85 | 7.4 | 1-octene | solution, INSITE technology (CGC/ZN) reactor blend |
| PE D56 | LLDPE | 0.919 | 1.1 | 8.0 | 1-octene | solution, ZN catalysis |

For the incorporation of thin layers of differentiated modulus, different polypropylene and polyethylene grades were used, pure, or in form of blends, as shown in Tables 4 and 5 below.

Table 4: Propylene-Based Polymers for use in the Inner Layer

|  | Type | Density (g/cc) | MFR (g/10min) 230°C/2.16kg | Comonomer | Process |
|---|---|---|---|---|---|
| PP03 | Polypropylene homopolymer | 0.900 | 3.5 | - |  |
| PP2N | Propylene-based random copolymer | 0.900 | 2 | Ethylene |  |
| PP24 | Propylene/ethylene random copolymer | 0.8585 | 2 | Ethylene | solution |

Table 5: Ethylene-Based Polymers for use in Inner Layer

|  | Type | Density (g/cc) | I2 (g/10min) 190°C/2.16kg | Comonomer | Process |
|---|---|---|---|---|---|
| PE04 | LDPE | 0.918 | 0.85 | 1-Hexene | Single solution reactor |
| PE19 | HDPE | 0.956 | 2 | - | Slurry process |

(continued)

|  | Type | Density (g/cc) | I2 (g/10min) 190°C/2.16kg | Comonomer | Process |
|---|---|---|---|---|---|
| PE815 | LLDPE | 0.868 | 0.5 | 1-Octene | Solution single reactor (CGC) |
| Film Fabrication | | | | | |

The samples were fabricated on a Collin (type 180/400) coextrusion blown film line. For the production of three-layer films, the line consisted of three extruders (A, C, D), whereas the production of five-layer films required four extruders (A, B, C, D). In order to obtain five layers, extruder B was equipped with a melt switch unit to separate the melt flow. The extruder specifications are summarized in Table 6.

Table 6: Extruder Specification and Layer Layout

| Extruder | A | B | C | B | D |
|---|---|---|---|---|---|
| Layer | Inner | Barrier/Tie | Core | Barrier/Tie | Outer |
| Screw length [mm] | 625 | 750 | 750 | 750 | 625 |
| Screw diameter [mm] | 25 | 30 | 30 | 30 | 25 |

The single extruder melt streams were then joined to a multilayer configuration (composition) using a spiral mandrel distributor (model RWT40) having a diameter of 60 mm and a die gap of 1.2 mm. The formed multilayer tube was cooled using a Dual lip air cooling ring.

The extrusion temperatures were set, accordingly, to get a melt temperature of about 220°C for polyethylene and about 230°C for polypropylene. The exact processing temperatures deviate according to the needs to produce films of proper quality. All of the films were produced using the following constant parameters: total output = 8 kg/h; blow-up ratio (BUR) = 2.5; die gap = 1.2, froze line height (FLH) $\approx$ 100-150 mm, and film thickness = 50 $\mu$m.

Layer ratios were determined by mass ratios of the compositions at the extruders used to form the multilayered film. Some films were also examined by optical microscopy to confirm ratios. Each layer ratio is based on total film thickness.

Film Property Measurements

Tear resistance, falling dart film impact strength, 2 percent Secant Modulus, Young Modulus, haze and gloss were each measured on the formulated multilayered films. Results are shown in Table 7 below.

Comparative Example 1 (film) was produced in a Collin GmbH blown film line, with a total thickness of 50 $\mu$m (microns) and with all three layers made of PE E51. Example 2 is another film made in the same line with total thickness of 50 $\mu$m (microns), comprising three layers with the structure A/B/A where A is PE E51 and B is PE19 (high density polyethylene (slurry process, I2=2 dg/min)), and the relative thickness is 45 percent / 10 percent / 45 percent. Example 2 has improved gloss (69 versus 52), improved tear (in MD, 968 g versus 666 g), improved Young Modulus (329 versus 281) and improved 2 percent Secant Modulus (225 versus 198).

Example 5 is a film similar to Example 2, but where layer B is made of PE815 (octene-1 comonomer, I2 = 0.5 dg/min, density = 0.868 g/cc). Example 5 has, relative to Comparative Example 1, improved dart impact, gloss, improve haze, improved MD tear, with slightly lower modulus. In Example 3, layer B is a 50/50 blend of PE19 and PE815. Example 3 has improved gloss and haze and MD tear, relative to Comparative Example 1, which has similar modulii. In Example 4, layer B is formed from PP24, and has improved properties (impact, optics, tear) compared to Comparative Example 1. In Example 6, the inner layer B is formed from a random polypropylene copolymer, PP2N, and this film has improved modulus, tear in both directions, and optics, relative to Comparative Example 1. Example 8 (five-layered film) also showed improved properties relative to Comparative Example 1.

Another comparative example, Comparative Example 9, has all three layers made of PE D56 (octene-1, I2 = 1.1dg/min, density = 0.919 g/cc). In Example 10, the inner layer B is formed from PE19, and in Example 11, the inner layer B is formed from the 50/50 blend of PE19 and PE815. As shown in Table 8, both films had improved properties relative to Comparative Example 9.

Another comparative example, Comparative Example 12, contained and inner layer formed from PE04 (hexene-1 LLDPE copolymer with I2 = 0.85dg/min, density = 0.918 g/cc). In this film, the inner layer is formed from a polymer very similar in composition and stiffness to the skin layers material (PE D56). No significant improvements in mechanical properties and optical properties are seen in this film.

Table 7: Examples and Comparative Examples (PE E51 in Skins)

| ID | Purpose | Inner Material | Layer (%) | Impact (g) | Gloss (%) | Haze (%) | Tear CD (g) | Tear MD (g) | Sec2% CD (MPa) | Young CD (MPa) |
|---|---|---|---|---|---|---|---|---|---|---|
| 1 | Comparative Example | PE E51 Monolayer | 45/10/45 | 794 | 51.9 | 14.3 | 1100 | 666 | 198 | 281 |
| 2 | Different HDPE Inner | PE19 | 45/10/45 | 585 | 69.4 | 10.1 | 1210 | 968 | 225 | 329 |
| 3 | Blend Inner Layer | 50wt % PE815 + 50wt% PE19 | 45/10/45 | 691 | 74.4 | 9.1 | 1200 | 936 | 200 | 281 |
| 4 | PP-based Inner Layer | PP24 | 45/10/45 | 822 | 57.6 | 12.7 | 1250 | 884 | 180 | 256 |
| 5 | PE-based Inner Layer | PE815 | 45/10/45 | 913 | 64.6 | 9.8 | 1120 | 792 | 174 | 245 |
| 6 | Random Copo. PP Inner | PP2N | 45/10/45 | 534 | 58.1 | 12.4 | 1430 | 876 | 241 | 347 |
| 7 | Homopolymer PP Inner | PP03 | 45/10/45 | 386 | 74.6 | 9.9 | 1460 | 947 | 265 | 390 |
| 8 | Homopolymer PP split Inner | PP03 | 25/5/40/5/25 | 514 | 61.6 | 14.5 | 1200 | 729 | 281 | 406 |

Table 8: Examples and Comparative Examples (PE D56 in Skins)

| ID | Purpose | Inner Material | Layer (%) | Impact (g) | Gloss (%) | Haze (%) | Tear CD (g) | Tear MD (g) | Sec2% CD (MPa) | Young CD (MPa) |
|---|---|---|---|---|---|---|---|---|---|---|
| 9 | Comparative Example | PE D56 Monolayer | 45/10/45 | 476 | 83.7 | 5.1 | 1070 | 858 | 174 | 232 |
| 10 | Different HDPE Inner | PE19 | 45/10/45 | 382 | 87.1 | 4.6 | 1090 | 919 | 182 | 263 |
| 11 | Blend Inner Layer | 50wt % PE815 + 50wt% PE19 | 45/10/45 | 526 | 87.6 | 4.7 | 1080 | 925 | 158 | 217 |
| 12 | Comp. Ex, 1-Hexene LLDPE in Inner | PE04 | 45/10/45 | 421 | 82,1 | 5.5 | 1120 | 889 | 158 | 220 |

Inner Layer Thickness

As shown in Table 9, a series of films were produced to test the inner layer thickness range for which the improvements in optics and tear were obtained.

Table 9: Multilayer Compositions Having Different Inner Layer Thickness

| ID | Structure | Purpose | Layer % | D ($\mu$m) ((microns)) |
|---|---|---|---|---|
| 13 | PE E51 | monolayer reference | 45/10/45 | 50 |
| 14 | PE E51/ PE19 /PE E51 | | 45/10/45 | 50 |
| 15 | PE E51/ PE19 /PE E51 | | 40/20/40 | 50 |
| 16 | PE E51/ PE19 /PE E51 | | 37/26/37 | 50 |
| 17 | PE E51/ PE19 /PE E51 | | 33/33/33 | 50 |
| 18 | PE E51/ PE19 /PE E51 | increasing inner layer thickness, decreasing skin layer thickness | 25/50/25 | 50 |

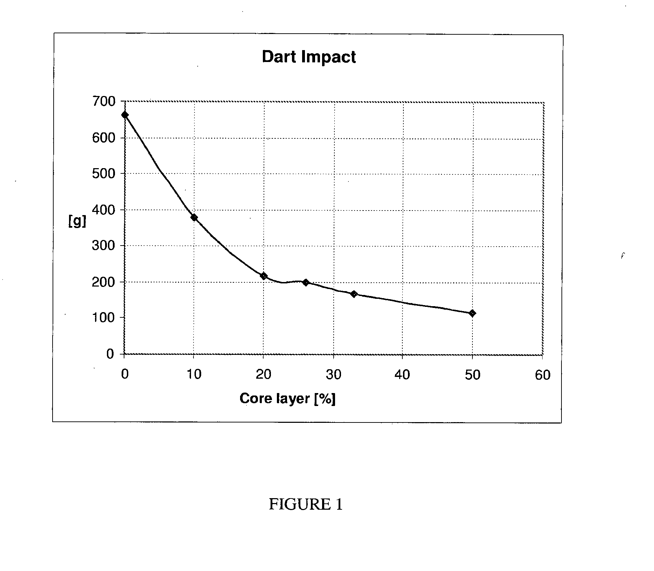

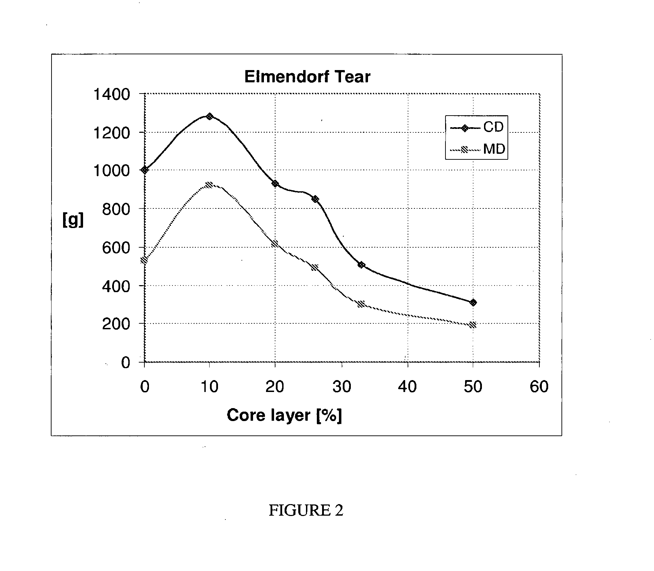

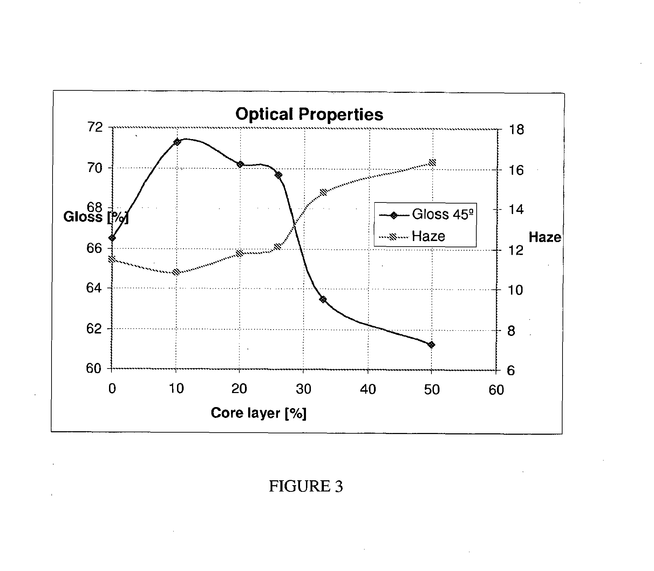

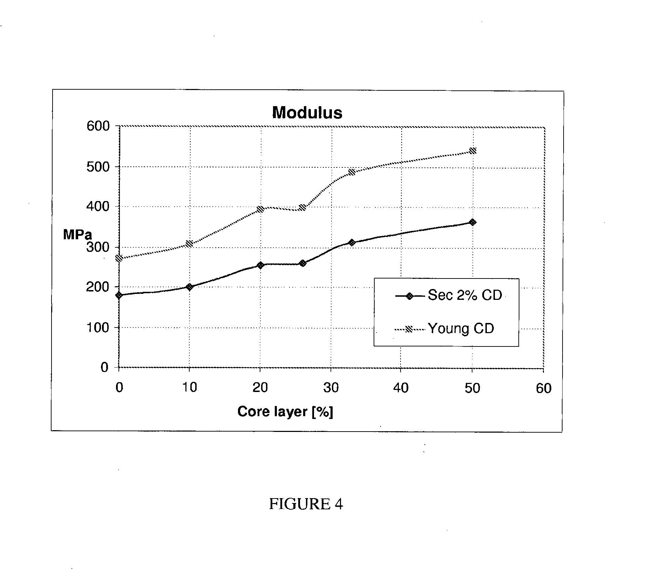

The results on Dart impact, Elmendorf tear resistance, gloss, haze and modulus are shown in Figure 1 to 4.
In terms of MD Elmendorf tear, the range of 5 to 20 percent shows improvement, while for optics (gloss) the range, with improvements extends to more than 25 percent. Films having an inner layer thickness of 20 percent or less have an improved combination of optics, dart impact and tear.

**Claims**

1.    A film comprising at least three layers, and wherein at least one layer is an inner layer with a thickness of 15 percent or less of the total thickness of the film, wherein said inner layer is formed from polymer component (a) as a single component or a blend comprising 50 to 100 weight percent of polymer component (a), and wherein said inner layer or polymer component (a) has one of the following properties:

A) a MD tensile, 2 percent secant modulus at least two times higher than the MD tensile, 2 percent secant modulus of a skin layer, or

B) a MD tensile, 2 percent secant modulus at least five times lower than the MD tensile, 2 percent secant modulus of a skin layer; and

wherein the MD tensile, 2 percent secant modulus of the inner layer, or of the polymer component (a) used to form the inner layer, is measured on a monolayered film formed from the composition of said inner layer, or the polymer component (a) used to form said inner layer, and in accordance with ISO 527-3-95; and

wherein the MD tensile, 2 percent secant modulus of the skin layer is measured on a monolayered film formed from the composition of said skin layer, and in accordance with ISO 527-3-95;

wherein the inner layer, or at least one polymer component of the inner layer, has one of the following properties:

C) a melt index, I2 (190°-C/2.16kg) of less than, or equal to 2 g/10 min (ASTM D-1238-04), or

D) a melt flow rate, MFR (230°C/2.16kg) of less than, or equal to, 5 g/10 min (ASTM D-1238-04); and

wherein the film does not contain an adhesive layer between two film layers.

2. The film of claim 1, wherein the at least one inner layer has a MD tensile, 2 percent secant modulus of at least two times higher than the MD tensile, 2 percent secant modulus of a skin layer.

3. The film of claim 1, wherein the at least one inner layer has a MD tensile, 2 percent secant modulus of at least five times lower than the MD tensile, 2 percent secant modulus of a skin layer.

4. The film of any of the preceding claims, wherein the at least one inner layer has melt index, I2 (190°C/2.16kg), of less than, or equal to, 2 g/10 min.

5. The film of any one of claims 1 to 3, wherein the at least one inner layer has melt flow rate, MFR (230°C/2.16kg), of less than, or equal to, 5 g/10min.

6. The film of any of the preceding claims, wherein the thickness of said inner layer is less than the thickness of the skin layer.

7. The film of any of the preceding claims, wherein each of the skin layers is adjacent to a respective surface of the inner layer.

8. The film of any of the preceding claims, wherein the at least one inner layer has a thickness from 10 to 15 percent of the total thickness of the film.

9. The film of any of the preceding claims, wherein the total thickness of the film is less than, or equal to, 50 $\mu$m (microns).

10. The film of any of the preceding claims, wherein the film consists of three layers.

11. The film of any of the preceding claims, wherein the at least one inner layer is formed from a composition comprising a propylene homopolymer, a propylene/$\alpha$-olefin interpolymer, a propylene/ethylene interpolymer, an ethylene/$\alpha$-olefin interpolymer, a blend comprising a propylene homopolymer, a blend comprising a propylene/$\alpha$-olefin interpolymer, a blend comprising a propylene/ethylene interpolymer, or a blend comprising an ethylene/$\alpha$-olefin interpolymer.

12. The film of claim 11, wherein the inner layer is formed from a composition comprising a propylene homopolymer, a propylene/$\alpha$-olefin interpolymer, a propylene/ethylene interpolymer, a blend comprising a propylene homopolymer, a blend comprising a propylene/$\alpha$-olefin interpolymer, or a blend comprising a propylene/ethylene interpolymer.

13. The film of any of the preceding claims, wherein the film is a blown film.

14. The film of any of the preceding claims, wherein it is the inner layer that has one of properties A) or B), and wherein the MD tensile, 2 percent secant modulus of the inner layer is measured on a monolayered film formed from the composition of the inner layer in accordance with ISO 527-3-95.

**15.** The film of any of the preceding claims, wherein it is the inner layer or polymer component (a) that has one of properties C) or D).

**16.** The film of claim 15, wherein it is the inner layer that has one of properties C) or D).

**17.** An article comprising at least one component formed from the film of any of the preceding claims.

**Patentansprüche**

**1.** Eine Folie, die mindestens drei Schichten beinhaltet, und
wobei mindestens eine Schicht eine innere Schicht mit einer Dicke von 15 Prozent oder weniger der Gesamtdicke der Folie ist, wobei die innere Schicht aus der Polymerkomponente (a) als einzelne Komponente oder als eine Mischung, beinhaltend 50 bis 100 Gewichtsprozent der Polymerkomponente (a), gebildet ist, und wobei die innere Schicht oder Polymerkomponente (a) eine der folgenden Eigenschaften aufweist:

(A) einen 2-Prozent-MD-Zug-Sekantenmodul, der mindestens zweimal höher als der 2-Prozent-MD-Zug-Sekantenmodul einer Hautschicht ist, oder
(B) einen 2-Prozent-MD-Zug-Sekantenmodul, der mindestens fünfmal niedriger als der 2-Prozent-MD-Zug-Sekantenmodul einer Hautschicht ist; und

wobei der 2-Prozent-MD-Zug-Sekantenmodul der inneren Schicht oder der Polymerkomponente (a), die zum Bilden der inneren Schicht verwendet wird, auf einer einschichtigen Folie, die aus der Zusammensetzung der inneren Schicht oder der zum Bilden der inneren Schicht verwendeten Polymerkomponente (a) gebildet ist, gemäß ISO 527-3-95 gemessen wird; und
wobei der 2-Prozent-MD-Zug-Sekantenmodul der Hautschicht auf einer einschichtigen Folie, die aus der Zusammensetzung der Hautschicht gebildet ist, gemäß ISO 527-3-95 gemessen wird;
wobei die innere Schicht oder mindestens eine Polymerkomponente der inneren Schicht eine der folgenden Eigenschaften aufweist:

(C) einen Schmelzindex, I2 (190 °C/2,16 kg) von weniger als oder gleich 2 g/10 min (ASTM D-1238-04) oder
(D) eine Schmelzflussrate, MFR (230 °C/2,16 kg) von weniger als oder gleich 5 g/10 min (ASTM D-1238-04); und

wobei die Folie zwischen zwei Folienschichten keine Klebeschicht enthält.

**2.** Folie gemäß Anspruch 1, wobei die mindestens eine innere Schicht einen 2-Prozent-MD-Zug-Sekantenmodul, der mindestens zweimal höher als der 2-Prozent-MD-Zug-Sekantenmodul einer Hautschicht ist, aufweist.

**3.** Folie gemäß Anspruch 1, wobei die mindestens eine innere Schicht einen 2-Prozent-MD-Zug-Sekantenmodul, der mindestens fünfmal niedriger als der 2-Prozent-MD-Zug-Sekantenmodul einer Hautschicht ist, aufweist.

**4.** Folie gemäß einem der vorhergehenden Ansprüche, wobei die mindestens eine innere Schicht einen Schmelzindex I2 (190 °C/2,16 kg) von weniger als oder gleich 2 g/10 min aufweist.

**5.** Folie gemäß einem der Ansprüche 1 bis 3, wobei die mindestens eine innere Schicht eine Schmelzflussrate, MFR (230 °C/2,16 kg) von weniger als oder gleich 5 g/10 min aufweist.

**6.** Folie gemäß einem der vorhergehenden Ansprüche, wobei die Dicke der inneren Schicht weniger als die Dicke der Hautschicht ist.

**7.** Folie gemäß einem der vorhergehenden Ansprüche, wobei jede der Hautschichten an eine entsprechende Oberfläche der inneren Schicht angrenzt.

**8.** Folie gemäß einem der vorhergehenden Ansprüche, wobei die mindestens eine innere Schicht eine Dicke von 10 bis 15 Prozent der Gesamtdicke der Folie aufweist.

**9.** Folie gemäß einem der vorhergehenden Ansprüche, wobei die Gesamtdicke der Folie weniger als oder gleich 50 μm (Mikrometer) beträgt.

**10.** Folie gemäß einem der vorhergehenden Ansprüche, wobei die Folie aus drei Schichten besteht.

**11.** Folie gemäß einem der vorhergehenden Ansprüche, wobei die mindestens eine innere Schicht aus einer Zusammensetzung gebildet ist, beinhaltend ein Propylen-Homopolymer, ein Propylen/$\alpha$-Olefin-Interpolymer, ein Propylen/Ethylen-Interpolymer, ein Ethylen/$\alpha$-Olefin-Interpolymer, ein Gemisch, beinhaltend ein Propylen-Homopolymer, ein Gemisch, beinhaltend ein Propylen/$\alpha$-Olefin-Interpolymer, ein Gemisch, beinhaltend ein Propylen/Ethylen-Interpolymer, oder ein Gemisch, beinhaltend ein Ethylen/$\alpha$-Olefin-Interpolymer.

**12.** Folie gemäß Anspruch 11, wobei die innere Schicht aus einer Zusammensetzung gebildet ist, beinhaltend ein Propylen-Homopolymer, ein Propylen/a-Olefin-Interpolymer, ein Propylen/Ethylen-Interpolymer, ein Gemisch, beinhaltend ein Propylen-Homopolymer, ein Gemisch, beinhaltend ein Propylen/$\alpha$-Olefin-Interpolymer, oder ein Gemisch, beinhaltend ein Propylen/Ethylen-Interpolymer.

**13.** Folie gemäß einem der vorhergehenden Ansprüche, wobei die Folie eine Blasfolie ist.

**14.** Folie gemäß einem der vorhergehenden Ansprüche, wobei die innere Schicht eine der Eigenschaften A) oder B) aufweist und wobei der 2-Prozent-MD-Sekantenmodul der inneren Schicht auf einer einschichtigen Folie, die aus der Zusammensetzung der inneren Schicht gebildet ist, gemäß ISO 527-3-95 gemessen wird.

**15.** Folie gemäß einem der vorhergehenden Ansprüche, wobei die innere Schicht oder Polymerkomponente (a) eine der Eigenschaften C) oder D) aufweist.

**16.** Folie gemäß Anspruch 15, wobei die innere Schicht eine der Eigenschaften C) oder D) aufweist.

**17.** Ein Artikel, der mindestens eine Komponente, die aus der Folie gemäß einem der vorhergehenden Ansprüche gebildet ist, beinhaltet.

**Revendications**

**1.** Un film comprenant au moins trois couches, et dans lequel au moins une couche est une couche interne ayant une épaisseur de 15 pour cent ou moins de l'épaisseur totale du film, ladite couche interne étant formée à partir d'un composant polymère (a) en tant que composant unique ou en tant qu'un mélange homogène comprenant de 50 à 100 pour cent en poids du composant polymère (a), et ladite couche interne ou ledit composant polymère (a) présentant l'une des propriétés suivantes :

A) un module sécant de 2 pour cent de traction de SM au moins deux fois plus élevé que le module sécant de 2 pour cent de traction de SM d'une couche de revêtement, ou
B) un module sécant de 2 pour cent de traction de SM au moins cinq fois plus faible que le module sécant de 2 pour cent de traction de SM d'une couche de revétement ; et

dans lequel le module sécant de 2 pour cent de traction de SM de la couche interne, ou du composant polymère (a) utilisé pour former la couche interne, est mesuré sur un film à une couche formé à partir de la composition de ladite couche interne, ou du composant polymère (a) utilisé pour former ladite couche interne, et conformément à l'ISO 527-3-95 ; et
dans lequel le module sécant de 2 pour cent de traction de SM de la couche de revêtement est mesuré sur un film à une couche formé à partir de la composition de ladite couche de revêtement, et conformément à l'ISO 527-3-95 ;
dans lequel la couche interne, ou au moins un composant polymère de la couche interne, présente l'une des propriétés suivantes :

C) un indice de fusion, I2 (190 °C/2,16 kg), inférieur ou égal à 2 g/10 min (ASTM D-1238-04), ou
D) un indice de fluidité à l'état fondu, IFC (230 °C/2,16 kg), inférieur ou égal à 5 g/10 min (ASTM D-1238-04) ; et

le film ne contenant pas de couche d'adhésif entre les deux couches de film.

**2.** Le film de la revendication 1, dans lequel l'au moins une couche interne présente un module sécant de 2 pour cent de traction de SM au moins deux fois plus élevé que le module sécant de 2 pour cent de traction de SM d'une couche de revêtement.

3. Le film de la revendication 1, dans lequel l'au moins une couche interne présente un module sécant de 2 pour cent de traction de SM au moins cinq fois plus faible que le module sécant de 2 pour cent de traction de SM d'une couche de revêtement.

4. Le film de n'importe lesquelles des revendications précédentes, dans lequel l'au moins une couche interne présente un indice de fusion, I2 (190 °C/2,16 kg), inférieur ou égal à 2 g/10 min.

5. Le film de n'importe laquelle des revendications 1 à 3, dans lequel l'au moins une couche interne présente un indice de fluidité à l'état fondu, IFC (230 °C/2,16 kg), inférieur ou égal à 5 g/10 min.

6. Le film de n'importe lesquelles des revendications précédentes, dans lequel l'épaisseur de ladite couche interne est inférieure à l'épaisseur de la couche de revêtement.

7. Le film de n'importe lesquelles des revendications précédentes, dans lequel chacune des couches de revêtement est adjacente à une surface respective de la couche interne.

8. Le film de n'importe lesquelles des revendications précédentes, dans lequel l'au moins une couche interne présente une épaisseur allant de 10 à 15 pour cent de l'épaisseur totale du film.

9. Le film de n'importe lesquelles des revendications précédentes, dans lequel l'épaisseur totale du film est inférieure ou égale à 50 $\mu$m (microns).

10. Le film de n'importe lesquelles des revendications précédentes, le film étant constitué de trois couches.

11. Le film de n'importe lesquelles des revendications précédentes, dans lequel l'au moins une couche interne est formée à partir d'une composition comprenant un homopolymère de propylène, un interpolymère de propylène/$\alpha$-oléfine, un interpolymère de propylène/éthylène, un interpolymère d'éthylène/$\alpha$-oléfine, un mélange homogène comprenant un homopolymère de propylène, un mélange homogène comprenant un interpolymère de propylène/$\alpha$-oléfine, un mélange homogène comprenant un interpolymère de propylène/éthylène, ou un mélange homogène comprenant un interpolymère d'éthylène/$\alpha$-oléfine.

12. Le film de la revendication 11, dans lequel la couche interne est formée à partir d'une composition comprenant un homopolymère de propylène, un interpolymère de propylène/$\alpha$-oléfine, un interpolymère de propylène/éthylène, un mélange homogène comprenant un homopolymère de propylène, un mélange homogène comprenant un interpolymère de propylène/$\alpha$-oléfine, ou un mélange homogène comprenant un interpolymère de propylène/éthylène.

13. Le film de n'importe lesquelles des revendications précédentes, le film étant un film soufflé.

14. Le film de n'importe lesquelles des revendications précédentes, dans lequel c'est la couche interne qui présente l'une des propriétés A) ou B), et dans lequel le module sécant de 2 pour cent de traction de SM de la couche interne est mesuré sur un film à une couche formé à partir de la composition de la couche interne conformément à l'ISO 527-3-95.

15. Le film de n'importe lesquelles des revendications précédentes, dans lequel c'est la couche interne ou le composant polymère (a) qui présente l'une des propriétés C) ou D).

16. Le film de la revendication 15, dans lequel c'est la couche interne qui présente l'une des propriétés C) ou D).

17. Un article comprenant au moins un composant formé à partir du film de n'importe lesquelles des revendications précédentes.

FIGURE 1

FIGURE 2

FIGURE 3

FIGURE 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2005065945 A
- WO 2004024433A2 A
- US 20010008687 A1
- US 5604019 A
- EP 0595701 B1
- JP 2000094604 A
- JP 6106679 A
- US 3645992 A
- US 5272236 A
- US 5278272 A
- US 5703187 A
- US 6054544 A
- US 6335410 B
- US 6723810 B
- US 4076698 A, Anderson
- US 4798081 A
- US 5008204 A
- US 4339507 A
- US 5844045 A, Kolthammer
- US 5869575 A
- US 6448341 B
- US 5414027 A, DeNicola
- EP 0190889 A, Himont

- US 5464907 A
- EP 0754711 A
- US 09133576 B
- US 6919407 B
- US 3456044 A, Pahlke
- US 4352849 A, Mueller
- US 4820557 A
- US 4837084 A, Warren
- US 4865902 A, Golike
- US 4927708 A, Herran
- US 4952451 A, Mueller
- US 4963419 A
- US 5059481 A, Lustig
- US 5288531 A, Falla
- US 5721025 A, Falla
- US 5360648 A, Falla
- US 6117465 A, Falla
- US 6723398 B, Chum
- US 4927888 A, Strait
- US 4950541 A, Tabor
- US 4762890 A, Strait
- US 5346963 A, Hughes
- US 4684576 A, Tabor

### Non-patent literature cited in the description

- **ELKOUN et al.** Properties and Structure of LLDPE/HDPE Three-Layer Coextruded Blown Films with Blended Middle Layers. *ANTEC,* 2003
- **ZHANG et al.** Polypropylene-Polyethylene Multilayer Films. *ANTEC,* 2005
- *Rev. Macromol. Chem. Phys.,* 1989, vol. C29 (2 &3), 285-297
- **WILD et al.** *Journal of Polymer Science, Poly. Phys. Ed.,* 1982, vol. 20, 441
- **GALLI et al.** *Angew. Macromol. Chem.,* 1984, vol. 120, 73
- **E.P. MOORE et al.** Polypropylene Handbook. Hanser Publishers, 1996, 11-98
- **KIRK-OTHMER.** The Encyclopedia of Chemical Technology. John Wiley & Sons, 1981, vol. 16, 416-417

- THE ENCYCLOPEDIA OF CHEMICAL TECHNOLOGY. vol. 18, 191-192
- **C. GLENN DAVIS.** Packaging Machinery Operation. Packaging Machinery Manufacturers Institute, 2000
- The Wiley Encyclopedia of Packaging Technology. John Wiley & Sons, 364-369
- **KENTON R. OSBORN ; WILMER A JENKENS.** Plastic Films, Technology and Packaging Applications. Technomic Publishing Co., Inc, 1992, 39-105
- **WILLIAMS ; WARD.** *J. Polym. Sci., Polym. Let.,* 1968, vol. 6, 621